# EUROPEAN PATENT APPLICATION

(11) **EP 4 836 038 A1**
(43) Date of publication of application: **04.11.2026**
(21) Application number: 24913212.7
(22) Date of filing: 25.06.2024
(51) Int. Cl.: H01M 8/1046, H01M 8/1044, H01M 8/1053, H01M 8/1081, H01M 8/1086, H01M 8/1067, H01M 8/1058, H01M 8/1004, H01B 1/12, H01M 8/10

(54) **ION CONDUCTOR DISPERSION COMPOSITION, POLYMER ELECTROLYTE MEMBRANE, MANUFACTURING METHOD THEREOF, AND MEMBRANE-ELECTRODE ASSEMBLY COMPRISING SAME**

(30) Priority: 26.12.2023 KR 20230191914; 24.05.2024 KR 20240068075
(71) Applicant: Kolon Industries, Inc., Seoul 07793 (KR)
(72) Inventor: PARK, Hyun Jin, Seoul 07793 (KR); KIM, Jun Young, Seoul 07793 (KR); KIM, Jung Ho, Seoul 07793 (KR); LEE, Ju Sung, Seoul 07793 (KR); LIM, Youngjoon, Seoul 07793 (KR)
(74) Representative: Vossius & Partner Patentanwälte Rechtsanwälte mbB
(86) International application number: PCT/KR2024/008811
(87) International publication number: WO 2025/143398

(57) **Abstract**

The present invention relates to an ion conductor dispersion composition, a polymer electrolyte membrane, a manufacturing method thereof, and a membrane-electrode assembly comprising same, and more specifically, to an ion conductor dispersion composition, a polymer electrolyte membrane, a manufacturing method thereof, and a membrane-electrode assembly comprising same, wherein an environmentally-friendly additive solvent is used instead of a conventional chemical-based solvent to improve the solubility and impregnability of the polymer, thereby improving electrochemical and mechanical stability, while being friendly to the environment.

## Description

### [Technical Field]

The present disclosure relates to an ion conductor dispersion composition, a polymer electrolyte membrane, a method of manufacturing the same, and a membrane-electrode assembly including the same, and more particularly, to an ion conductor dispersion composition, a polymer electrolyte membrane, a method of manufacturing the same, and a membrane-electrode assembly including the same, which improve solubility and impregnability of a polymer and thereby improve electrochemical and mechanical stability while being eco-friendly by using an eco-friendly additive solvent instead of an existing chemistry-based solvent.

The present disclosure relates to a result of a project (Project Identification Number: 20223030040220) conducted with the support of the Ministry of Trade, Industry and Energy (MOTIE) and the Korea Institute of Energy Technology Evaluation and Planning (KETEP).

### [Background Art]

In order to solve problems regarding depletion of fossil fuels and environmental pollution, efforts are being made to save fossil fuels or apply renewable energy to more fields by improving use efficiency.

For example, a fuel cell is a cell comprising a power generation system that directly converts chemical reaction energy, such as an oxidation/reduction reaction of hydrogen and oxygen contained in a hydrocarbon-based fuel material such as methanol, ethanol, or natural gas, into electrical energy, and is in the spotlight as a next-generation clean energy source that may replace fossil energy due to high energy efficiency and eco-friendly characteristics with low pollutant emissions.

Among them, a proton exchange membrane fuel cell (PEMFC) using a polymer electrolyte may directly convert chemical energy into electrical energy and emit a non-toxic material such as water, and thus is receiving considerable attention as an alternative energy system for automobiles, portable electronic devices, and the like.

Meanwhile, due to increasing demand for alternative energy to replace fossil fuels, interest in highly efficient, inexpensive, and eco-friendly energy conversion or storage system is rising; among these, fuel production through water electrolysis, which has a high possibility of commercialization as an important alternative considering environmental and energy issues, is receiving much attention. Water electrolysis is a technology that electrochemically decomposes water to produce hydrogen and oxygen.

Among them, in a system of a proton exchange membrane water electrolysis cell (PEMWE), a membrane-electrode assembly (MEA) that actually generates hydrogen has a structure in which an oxygen generation electrode, which is an electrode where an oxygen evolution reaction occurs, and a hydrogen generation electrode, where a hydrogen evolution reaction occurs, are positioned with a polymer electrolyte membrane including a hydrogen ion conductive polymer interposed therebetween.

Such a fuel cell and a water electrolysis cell are commonly referred to as an electrochemical cell, and among them, in a system of a polymer electrolyte fuel cell or a polymer electrolyte water electrolysis cell using a polymer electrolyte membrane, a representative material for the polymer electrolyte membrane (PEM) may include a perfluorinated sulfonic acid ionomer (PFSA) as Nafion^{®} from DuPont in the US.

PFSA comprises a polytetrafluoroethylene (PTFE) main chain having excellent chemical durability and a perfluorovinyl ether side chain including a sulfonic acid group (-SO₃H) having proton conductivity as an end group.

The main chain of the polymer has a crystalline structure, the side chain has an amorphous structure, and the end group forms an ion-water transfer channel. Due to this, ion-water transport channels are differently formed depending on the lengths of the main chain, the end group repeating unit, and the side chain, and as a result, ion conductivity, mechanical permeability, and mechanical/chemical/thermal properties may vary.

Due to such a structure, a solvent that may be used for manufacturing an electrolyte membrane is limited, and generally used water/alcohol systems require an alcohol-based solvent for impregnation in a porous support and affect a microstructure such as a pore size, a pore shape, and a surface shape of the electrolyte membrane depending on a ratio, but they exibit low impregnability and low ion conductivity due to dispersion shape, a low solid content, and low dispersion stability.

A chemistry-based solvent other than the water/alcohol systems, such as N-methyl-2-pyrrolidone (NMP), dimethylformamide (DMF), and dimethylacetamide (DMAc), has high impregnability and high ion conductivity due to a solution form and a high solid content, but is harmful to the human body and may cause problems in environmental pollution, and has a problem in that costs for wastewater treatment or purification facilities increase.

Accordingly, there is a need for a solvent that may replace the chemistry-based solvent, while having physical properties similar to those of the chemistry-based solvent but having no toxicity.

### [Disclosure]

### [Technical Problem]

According to an embodiment, an ion conductor dispersion composition is provided, which uses an eco-friendly additive solvent instead of a conventional chemistry-based solvent to improve solubility and impregnability of a polymer, thereby improving electrochemical and mechanical stability while being eco-friendly.

According to another embodiment, a polymer electrolyte membrane is provided.

According to another embodiment, a method of manufacturing the polymer electrolyte membrane is provided.

### [Technical Solution]

An ion conductor dispersion composition according to an embodiment comprises an ion conductor, a solvent, an eco-friendly additive solvent, and a non-solvent, wherein a pKa value of the eco-friendly additive solvent is in a range of 0 to 7.5, and the eco-friendly additive solvent satisfies that a dispersion term of a Hansen solubility parameter is greater than or equal to 16 MPa^{0.5}, a polar term is greater than or equal to 6 MPa^{0.5}, and a hydrogen bonding term is less than or equal to 13 MPa^{0.5}.

The eco-friendly additive solvent may have a score in a range of 4 to 10 in all items according to a solvent selection guide standard of GSK.

The eco-friendly additive solvent is a polar aprotic solvent, and the polar aprotic solvent may be gamma-butyrolactone (γ-Butyrolactone), methyl L-lactate (Methyl L-lactate), gamma-valerolactone (γ-Valerolactone), ethyl lactate (ethyl lactate), dimethyl carbonate (Dimethyl Carbonate), cyclic carbonate (cyclic carbonate), succinic acid (succinic acid), diformylxylose (Diformylxylose), pentanoic acid 5-(dimethylamino)-2-methyl-5-oxo methyl ester (pentanoic acid, 5-(dimethylamino)-2-methyl-5-oxo-, methyl ester; CAS No. 1174627-68-9), dihydrolevoglucosenone (dihydrolevoglucosenone), methyl sesamol (methyl sesamol), or a combination thereof.

A distance (Rₐ) between a Hansen solubility parameter of the ion conductor and a Hansen solubility parameter of a mixture of the solvent, the eco-friendly additive solvent, and the non-solvent, calculated according to Equation 1 below, is in a range of 0.1 MPa^{0.5} to 30 MPa^{0.5}, and a dispersion term, a polar term, and a hydrogen bonding term of the Hansen solubility parameter of the mixture of the solvent, the eco-friendly additive solvent, and the non-solvent may be calculated according to Equations 2-1 to 2-3 below. [Equation 1] ${R}_{a} = \sqrt{4 {\left({δ}_{d 1}-{δ}_{d 2}\right)}^{2} + {\left({δ}_{p 1}-{δ}_{p 2}\right)}^{2} + {\left({δ}_{h 1}-{δ}_{h 2}\right)}^{2}}$ In Equation 1,
the δ_{d1} (unit: MPa^{0.5}) is a dispersion term of the ion conductor, and
the δ_{d2} (unit: MPa^{0.5}) is the dispersion term of the mixture, and
the δₚ₁ (unit: MPa^{0.5}) is a polar term of the ion conductor, and
the δₚ₂ (unit: MPa^{0.5}) is the polar term of the mixture, and
the δₕ₁ (unit: MPa^{0.5}) is the hydrogen bonding term of the ion conductor, and
the δₕ₂ (unit: MPa^{0.5}) is the hydrogen bonding term of the mixture: [Equation 2-1] ${δ}_{d 2} = \frac{{w}_{1} {δ}_{d , 1} + {w}_{2} {δ}_{d , 2} + {w}_{3} {δ}_{d , 3}}{100}$ [Equation 2-2] ${δ}_{p 2} = \frac{{w}_{1} {δ}_{p , 1} + {w}_{2} {δ}_{p , 2} + {w}_{3} {δ}_{p , 3}}{100}$ [Equation 2-3] ${δ}_{h 2} = \frac{{w}_{1} {δ}_{h , 1} + {w}_{2} {δ}_{h , 2} + {w}_{3} {δ}_{h , 3}}{100}$

In Equations 2-1 to 2-3, δ_{d2} is the dispersion term of the mixture, δₚ₂ is the polar term of the mixture, δₕ₂ is the hydrogen bonding term of the mixture, w₁ is the weight of the solvent, w₂ is the weight of the eco-friendly additive solvent, w₃ is the weight of the non-solvent, δ_{d,1}, δ_{p,1}, and δ_{h,1} are respectively the dispersion term, the polar term, and the hydrogen bonding term of the Hansen solubility parameter of the solvent, δ_{d,2}, δ_{p,2}, and δ_{h,2} are the dispersion term, the polar term, and the hydrogen bonding term of the Hansen solubility parameter of the eco-friendly additive solvent, and δ_{d,3}, δ_{p,3}, and δ_{h,3} are the dispersion term, the polar term, and the hydrogen bonding term of the Hansen solubility parameter of the non-solvent.

The eco-friendly additive solvent may be included in a range of 3 wt% to 20 wt% based on the total weight of the ion conductor dispersion composition, the solvent may be included in a range of 180 parts by weight to 1000 parts by weight with respect to 100 parts by weight of the eco-friendly additive solvent, and the non-solvent may be included in a range of 100 parts by weight to 500 parts by weight with respect to 100 parts by weight of the eco-friendly additive solvent.

The viscosity, measured using a rheometer under a flow sweep measurement protocol at 25°C, may be in a range of 200 cP to 1100 cP.

A rate of change in a contact angle with respect to a support calculated according to Formula 1 below may be 30% to 60%. [Equation 1] $Rate of change in a contact angle with respect to a support = \left(a-b\right) / a \times 100$

In Equation 1, a is a contact angle with respect to the support when the ion conductor dispersion composition is dropped onto the support for a 1st time, and b is a contact angle with respect to the support when the ion conductor dispersion composition is dropped onto the support for a 200th time.

An ion conductor dispersion particle size in the ion conductor dispersion composition may be in a range of 500 nm to 2000 nm.

An ion conductor polydispersity index in the ion conductor dispersion composition may be in a range of 0.9 to 1.5.

According to another embodiment, a method of manufacturing a polymer electrolyte membrane comprises mixing an ion conductor with a solvent to prepare a first mixture, adding an eco-friendly additive solvent to the first mixture and mixing to prepare a second mixture, adding a non-solvent to the second mixture and mixing to prepare an ion conductor dispersion composition, and manufacturing a polymer electrolyte membrane by coating the ion conductor dispersion composition on a substrate and then performing drying and heat treatment, wherein a pKa value of the eco-friendly additive solvent is in a range of 0 to 7.5, and the eco-friendly additive solvent satisfies that a dispersion term of a Hansen solubility parameter is greater than or equal to 16 MPa^{0.5}, a polar term is greater than or equal to 6 MPa^{0.5}, and a hydrogen bonding term is less than or equal to 13 MPa^{1.5}.

The method may further comprise, after coating the ion conductor dispersion composition on the substrate and before performing the drying and the heat treatment, placing a porous support on the substrate coated with the ion conductor dispersion composition, and coating the ion conductor dispersion composition again on the porous support.

The drying may be performed under a temperature in a range of 60°C to 120°C, and the heat treatment may be performed under a temperature in a range of 150°C to 220°C when a fluorine-based ion conductor is used, and may be performed under a temperature in a range of 80°C to 500°C when a hydrocarbon-based ion conductor is used.

According to another embodiment, a polymer electrolyte membrane comprises a porous support including a plurality of pores, and an ion conductor filling the pores of the porous support, and a transparency (haze) measured by total light transmittance equipment may be 0.1% to 10%.

In the polymer electrolyte membrane, a total light transmittance (T.t) measured by total light transmittance equipment may be greater than or equal to 90%.

In the polymer electrolyte membrane, a tensile strength in a machine direction (MD) may be greater than or equal to 35 MPa, and a tensile strength in a transverse direction (TD) may be greater than or equal to 30 MPa.

In the polymer electrolyte membrane, an absolute value of a difference between an elongation in the machine direction (MD) and an elongation in the transverse direction (TD) may be less than or equal to 50%.

In the polymer electrolyte membrane, an in-plane wet expansion rate measured at 15°C to 25°C may be less than or equal to 20%.

In the polymer electrolyte membrane, an in-plane wet expansion rate measured at 75°C to 85°C may be less than or equal to 40%.

A membrane-electrode assembly according to another embodiment comprises the polymer electrolyte membrane; a hydrogen electrode positioned on one surface of the polymer electrolyte membrane; and an air electrode positioned on the other surface of the polymer electrolyte membrane.

An electrochemical cell according to another embodiment comprises the membrane-electrode assembly.

### [Advantageous Effects]

By using an eco-friendly additive solvent instead of an existing chemistry-based solvent, an ion conductor dispersion composition according to an embodiment may be eco-friendly, improve solubility and impregnability of a polymer, and thereby improve electrochemical and mechanical stability.

### [Brief Description Of The Drawings]

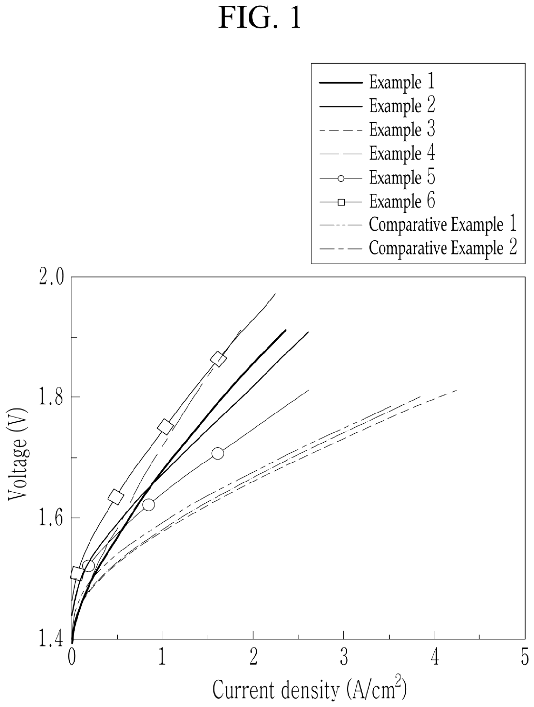

FIG. 1 is a graph showing results of evaluating IV characteristics of membrane-electrode assemblies including the polymer electrolyte membranes manufactured in Examples 1 to 6 and Comparative Examples 1 and 2.

### [Best Mode]

Hereinafter, embodiments of the present disclosure will be described in detail so that those of ordinary skill in the art to which the present disclosure pertains may easily implement them. However, the present disclosure may be implemented in various different forms and is not limited to the embodiments described herein.

In the present specification, "a combination thereof" refers to a mixture, a laminate, a composite, a copolymer, an alloy, a blend, a reaction product, or the like of components.

In the present specification, terms such as "include", "comprise", or "have" are intended to designate the presence of implemented features, numbers, steps, components, or a combination thereof, and it should be understood that they do not preclude the possibility of the presence or addition of one or more other features, numbers, steps, components, or a combination thereof.

### 1. Ion conductor dispersion composition

An ion conductor dispersion composition according to an embodiment comprises an ion conductor, a solvent, and an eco-friendly additive solvent.

In the present specification, the term eco-friendly additive solvent refers to a solvent that minimizes a negative impact of the solvent on the environment from chemical material production to disposal of the solvent.

The eco-friendly additive solvent complies with the solvent selection guide standard (2016 ver) of GSK.

### [Categories classified according to the solvent selection guide standard of GSK]

- waste (waste)
- environmental impact (environment impact)
- health (health)
- safety evaluation (safety)

The "waste" category specifically includes an incineration item, a recycling item, a biological treatment item, and a VOC emission item, the "environmental impact" category specifically includes a water pollution item and an air pollution item, the "health" category specifically includes an exposure possibility item and a health hazard item, and the "safety evaluation" category specifically includes a flammability (explosion possibility) item and a reactivity (stability) item. According to the solvent selection guide of GSK, each category is evaluated on a scale of 1 to 10, wherein a value closer to 10 indicates a degree of having no problems related to each category, and a value closer to 1 indicates the presence of well-known problems related to each category. Reflecting that each category is evaluated on a scale of 1 to 10, the result is categorized into 'Major known issue', 'Some known issues', or 'Few known issues' based on the following evaluation values.

Specifically, in each category, values of 1 to 3 are evaluated as "Major known issue", values of 4 to 7 are evaluated as "Some known issues", and values of 8 to 10 are evaluated as "Few known issue".

In the present specification, the eco-friendly additive solvent refers to a solvent having a score within a range of 4 to 10 in all items according to the solvent selection guide of GSK.

Table 1 below shows the evaluation of all detailed items in each category classified according to the solvent selection guide of GSK for water, gamma-butyrolactone, methyl L-lactate, N-methyl-2-pyrrolidone, and propyl alcohol, respectively, on a scale of 1 to 10.

**[Table 1]**

| Term in the pres ent spec ificati on | | Waste | | | | Environment | | Health | | Safety | |
|---|---|---|---|---|---|---|---|---|---|---|---|
| | | Incin erati on | Rec ycli ng | Bio | VO C | Wa ter | Air | Exp osu re | He alt h | Flam mabili ty | Reactiv ity/Stab ility |
| | | | | Tre atm ent | Em issi on | Pol luti on | Pol luti on | Pot enti al | Ha za rd | Explo siven ess | |
| Solv ent | Wate r | 4 | 2 | 4 | 6 | 10 | 8 | 10 | 9 | 8 | 10 |
| Eco-frien dly addit ive solv ent | Gam mabutyr olact one | 8 | 7 | 10 | 8 | 10 | 6 | 4 | 6 | 9 | 10 |
| | Meth yl L-lactat e | 4 | 6 | 4 | 8 | 9 | 6 | 10 | 6 | 8 | 9 |
| Che mica l-base d | N-meth yl-2-pyrrol idone | 3 | 4 | 3 | 10 | 10 | 6 | 1 | 9 | 9 | 9 |
| solv ent | Prop yl alcoh ol | 5 | 3 | 3 | 6 | 10 | 4 | 10 | 7 | 8 | 10 |

In Table 1, it may be confirmed that N-methyl-2-pyrrolidone and propyl alcohol, which are chemical-based solvents, are evaluated as having a value of less than 4 in the waste and health categories.

On the other hand, it may be confirmed that gamma-butyrolactone and methyl L-lactate correspond to the eco-friendly additive solvent referred to in the present specification, as they were evaluated as having values greater than or equal to 4 in all items of each category.

That is, since the eco-friendly additive solvent is evaluated with a value within a range of 4 to 10 in all items in the categories classified below according to the solvent selection guide of GSK, the problems wherein conventional chemical-based solvents were harmful to the human body and caused environmental pollution may be resolved, and the eco-friendly additive solvent may be more eco-friendly than conventional chemical-based solvents, while exhibiting physical properties equal or superior to those of existing chemical-based solvents.

The pKa of the eco-friendly additive solvent is characterized by being 0 to 7.5, specifically, the pKa of the eco-friendly additive solvent may be 1 to 7, 2 to 6, 3 to 5, or 3.5 to 4.5. When manufacturing a polymer electrolyte membrane using the eco-friendly additive solvent satisfying the above-described pKa value, a high protonation level of SO³⁻ groups of the polymer electrolyte membrane may be maintained, and thereby the performance of the polymer electrolyte membrane may be improved.

The eco-friendly additive solvent satisfies that the dispersion term (δ_{d}), the polar term (δₚ), and the hydrogen bonding term (δₙ) of the Hansen solubility parameter are respectively within predetermined ranges. In this case, the Hansen solubility parameter of the eco-friendly additive solvent may be based on a value known through known Hansen solubility parameters for each corresponding material (for example, Charles Hansen, "Hansen Solubility Parameters: A User's Handbook" CRC Press (2007), "The CRC Handbook and Solubility Parameters and Cohesion Parameters," Allan F. M. Barton (1999), etc.) or a value calculated by commercialized software such as Molecular Modeling Pro, Dynacomp Software, or HSPiP.

For example, the estimated value of the Hansen solubility parameter at 25°C by SMILES using the computer software HANSEN SOLUBILITY PARAMETERS IN PRACTICE (HSPiP) VER 5.2.06 and software ChemDraw (a function of estimating a Hansen solubility parameter from a molecular structure of a solvent) may be used.

The dispersion term is characterized by being greater than or equal to 16 MPa^{0.5}. For example, a lower limit of the dispersion term may be about 16 MPa^{0.5}, 16.5 MPa^{0.5}, 17 MPa^{0.5}, 17.5 MPa^{0.5}, or 18 MPa^{0.5}, and an upper limit thereof is not limited, but for example, may be about 20 MPa^{0.5}, 19 MPa^{0.5}, 18 MPa^{0.5}, 17 MPa^{0.5}, or 16 MPa^{0.5}. The dispersion term may have a range of greater than or equal to, or greater than any one lower limit among the above-described lower limits; or greater than or equal to, or greater than any one lower limit among the above-described lower limits and less than or equal to, or less than any one upper limit among the above-described upper limits.

The polar term is characterized by being greater than or equal to 6 MPa^{0.5}. For example, a lower limit of the polar term may be about 6 MPa^{0.5}, 6.5 MPa^{0.5}, 7 MPa^{0.5}, 8 MPa^{0.5}, 9 MPa^{0.5}, 10 MPa^{0.5}, 11 MPa^{0.5}, 12 MPa^{0.5}, 13 MPa^{0.5}, 14 MPa^{0.5}, 15 MPa^{0.5}, or 16 MPa^{0.5}, and an upper limit thereof is not limited, but for example, may be about 25.5 MPa^{0.5}, 21.7 MPa^{0.5}, 19 MPa^{0.5}, 18 MPa^{0.5}, 17 MPa^{0.5}, or 16 MPa^{0.5}. The polar term may have a range of greater than or equal to, or greater than any one lower limit among the above-described lower limits; or greater than or equal to, or greater than any one lower limit among the above-described lower limits and less than or equal to, or less than any one upper limit among the above-described upper limits.

The hydrogen bonding term is characterized by being less than or equal to 13 MPa^{0.5}. For example, a lower limit of the hydrogen bonding term is not limited, but for example, may be about 0 MPa^{0.5}, 0.5 MPa^{0.5}, 1 MPa^{0.5}, 2 MPa^{0.5}, 3 MPa^{0.5}, 4 MPa^{0.5}, 5 MPa^{0.5}, 6 MPa^{0.5}, 7 MPa^{0.5}, 8 MPa^{0.5}, 9 MPa^{0.5}, or 10 MPa^{0.5}. An upper limit thereof may be about 13 MPa^{0.5}, 12 MPa^{0.5}, 11 MPa^{0.5}, 10 MPa^{0.5}, 9.8 MPa^{0.5}, 9.6 MPa^{0.5}, 9.4 MPa^{0.5}, 9.2 MPa^{0.5}, 9 MPa^{0.5}, 8.8 MPa^{0.5}, 8.6 MPa^{0.5}, 8.4 MPa^{0.5}, 8.2 MPa^{0.5}, 8 MPa^{0.5}, 7.8 MPa^{0.5}, or 7.6 MPa^{0.5}. The hydrogen bonding term may have a range of less than or equal to, or less than any one upper limit among the above-described upper limits; or greater than or equal to, or greater than any one lower limit among the above-described lower limits and less than or equal to, or less than any one upper limit among the above-described upper limits.

By including the eco-friendly additive solvent satisfying the above-described toxicity value and the value of the Hansen solubility parameter, solubility and impregnability of a polymer may be improved while being eco-friendly, and thereby electrochemical and mechanical stability may be improved.

As long as the eco-friendly additive solvent is evaluated as having a value within a range of 4 to 10 for all items in each category classified according to the solvent selection guide of GSK as described above and satisfies the Hansen solubility parameter value, the type thereof is not limited. In Table 1, only the evaluated values for all items in each category classified according to the solvent selection guide of GSK for gamma-butyrolactone and methyl L-lactate used in the following Examples are described, but the type of the eco-friendly additive solvent is not limited thereto.

For example, the eco-friendly additive solvent may be a polar aprotic solvent. The aprotic solvent refers to a solvent not having a functional group from which one or more hydrogen atoms in a solvent molecule may be removed as a proton.

The polar aprotic solvent may be γ-Butyrolactone, Methyl L-lactate, γ-Valerolactone, ethyl lactate, Dimethyl Carbonate, cyclic carbonate, succinic acid, Diformylxylose, pentanoic acid, 5-(dimethylamino)-2-methyl-5-oxo-, methyl ester; CAS No. 1174627-68-9, dihydrolevoglucosenone, methyl sesamol, or a combination thereof. For example, pentanoic acid 5-(dimethylamino)-2-methyl-5-oxo methyl ester may be commercially available as PolarClean from Rhodiasolv, and dihydrolevoglucosenone may be commercially available as hydro-LGE (Cyrene^{™}).

The ion conductor may include a fluorine-based ion conductor, a hydrocarbon-based ion conductor, and a combination thereof.

The fluorine-based ion conductor is (i) a fluorine-based polymer including fluorine in a main chain, or (ii) a partially fluorinated polymer, such as a polystyrene-graft-ethylenetetrafluoroethylene copolymer, a polystyrene-graft-polytetrafluoroethylene copolymer, or the like, having a cation exchange group or an anion exchange group.

The cation exchange group is a functional group that may transfer a cation, such as a proton, and may be, for example, an acidic group such as a sulfonic acid group, a carboxyl group, a boronic acid group, a phosphoric acid group, an imide group, a sulfonimide group, a sulfonamide group, or the like.

The anion exchange group is a functional group that may transfer an anion such as a hydroxy ion, a carbonate ion, or a bicarbonate ion.

Examples of the fluorine-based ion conductor include, but are not limited to, (i) poly(perfluorosulfonic acid), (ii) poly(perfluorocarboxylic acid), (iii) a copolymer of tetrafluoroethylene and fluorovinyl ether including a sulfonic acid group, and (iv) defluorinated sulfurized polyetherketone.

The hydrocarbon-based ion conductor is a hydrocarbon-based polymer having a cation exchange group or an anion exchange group (for example, a hydrocarbon-based polymer containing, in a main chain thereof, imidazole, benzimidazole, polyamide, polyamideimide, polyimide, polyacetal, polyethylene, polypropylene, acrylic resin, polysulfone, polyether, polyester, polyethersulfone, polyetherimide, polycarbonate, polystyrene, polyphenylene sulfide, polyetheretherketone, polyetherketone, polyarylethersulfone, polyphosphazene, polyphenylquinoxaline, or a combination thereof).

The hydrocarbon-based ion conductor includes, but is not limited to, sulfonated polyimide (S-PI), sulfonated polyarylethersulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ethernitrile, sulfonated polyarylene ether ether nitrile, and sulfonated polyarylene ether sulfone ketone.

The solvent may be a polar solvent.

The polar solvent may include water, tetrahydrofuran, 1,4-dioxane, dimethyl acetamide, dimethyl formamide, dimethyl sulfoxide, methylene chloride, acetonitrile, propylene carbonate, methylpyrrolidone (N-methyl-2-pyrrolidone), ethyl acetate, and a mixture thereof.

For example, the solvent may be water.

The ion conductor dispersion composition may further comprise a non-solvent different from the solvent.

The non-solvent may be an alcohol (alcohol). For example, it may be methanol, ethanol, propanol, butanol, or a combination thereof.

In the ion conductor dispersion composition, a value of a distance (Rₐ) between a Hansen solubility parameter of the ion conductor and a Hansen solubility parameter of a mixture including the eco-friendly additive solvent may be within a predetermined range.

The distance (Rₐ) is calculated according to Equation 1 below. [Equation 1] ${R}_{a} = \sqrt{4 {\left({δ}_{d 1}-{δ}_{d 2}\right)}^{2} + {\left({δ}_{p 1}-{δ}_{p 2}\right)}^{2} + {\left({δ}_{h 1}-{δ}_{h 2}\right)}^{2}}$

In Equation 1, the δ_{d1} (unit: MPa^{0.5}) is a dispersion term of the ion conductor, the δ_{d2} (unit: MPa^{0.5}) is a dispersion term of the mixture, the δₚ₁ (unit: MPa^{0.5}) is a polar term of the ion conductor, the δₚ₂ (unit: MPa^{0.5}) is a polar term of the mixture, the δₕ₁ (unit: MPa^{0.5}) is a hydrogen bonding term of the ion conductor, and the δₕ₂ (unit: MPa^{0.5}) is a hydrogen bonding term of the mixture.

In Equation 1, the dispersion term, the polar term, and the hydrogen bonding term of the ion conductor are known. In Equation 1, Hansen solubility parameters for the solvent, the eco-friendly additive solvent, and the non-solvent included in the mixture are known, and the dispersion term (δ_{d2}), the polar term (δₚ₂), and the hydrogen bonding term (δₕ₂) of the mixture according to a weight ratio of each component included in the mixture may be calculated according to Equations 2-1 to 2-3 below, respectively. [Equation 2-1] ${δ}_{d 2} = \frac{{w}_{1} {δ}_{d , 1} + {w}_{2} {δ}_{d , 2} + {w}_{3} {δ}_{d , 3}}{100}$ [Equation 2-2] ${δ}_{p 2} = \frac{{w}_{1} {δ}_{p , 1} + {w}_{2} {δ}_{p , 2} + {w}_{3} {δ}_{p , 3}}{100}$ [Equation 2-3] ${δ}_{h 2} = \frac{{w}_{1} {δ}_{h , 1} + {w}_{2} {δ}_{h , 2} + {w}_{3} {δ}_{h , 3}}{100}$

In Equations 2-1 to 2-3, δ_{d2} is a dispersion term of the mixture, δₚ₂ is a polar term of the mixture, δₕ₂ is a hydrogen bonding term of the mixture, w₁ is a weight of the solvent, w₂ is a weight of the eco-friendly additive solvent, w₃ is a weight of the non-solvent, δ_{d,1}, δ_{p,1}, and δ_{h,1} are respectively a dispersion term, a polar term, and a hydrogen bonding term of a Hansen solubility parameter of the solvent, δ_{d,2}, δ_{p,2}, and δ_{h,2} are a dispersion term, a polar term, and a hydrogen bonding term of a Hansen solubility parameter of the eco-friendly additive solvent, and δ_{d,3}, δ_{p,3}, and δ_{h,3} are a dispersion term, a polar term, and a hydrogen bonding term of a Hansen solubility parameter of the non-solvent.

That is, the distance (Rₐ) is a result calculated by substituting the dispersion term, the polar term, and the hydrogen bonding term of the mixture, which are calculated according to Equations 2-1 to 2-3, into Equation 1. A lower limit of the distance (Rₐ) may be about 0.1 MPa^{0.5}, 0.5 MPa^{0.5}, 1 MPa^{0.5}, 1.5 MPa^{0.5}, 2 MPa^{0.5}, 2.5 MPa^{0.5}, 3 MPa^{0.5}, 3.5 MPa^{0.5}, 4 MPa^{0.5}, 4.5 MPa^{0.5}, 5 MPa^{0.5}, 6 MPa^{0.5}, 8 MPa^{0.5}, 8 MPa^{0.5}, 9 MPa^{0.5}, 10 MPa^{0.5}, 11 MPa^{0.5}, 12 MPa^{0.5}, 13 MPa^{0.5}, 14 MPa^{0.5}, 15 MPa^{0.5}, 16 MPa^{0.5}, 17 MPa^{0.5}, 18 MPa^{0.5}, 19 MPa^{0.5}, or 20 MPa^{0.5}, and an upper limit thereof may be about 30 MPa^{0.5}, 29 MPa^{0.5}, 28 MPa^{0.5}, 27 MPa^{0.5}, 26 MPa^{0.5}, 25 MPa^{0.5}, 24 MPa^{0.5}, 23 MPa^{0.5}, 22 MPa^{0.5}, 21 MPa^{0.5}, 20 MPa^{0.5}, 19 MPa^{0.5}, 18 MPa^{0.5}, or 17 MPa^{0.5}.

The distance (Rₐ) may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits and less than or equal to, or less than any one upper limit among the above-described upper limits.

A weight ratio of each component included in the mixture may be appropriately adjusted such that the distance (Rₐ) is within the above-described range.

The eco-friendly additive solvent may be included within a predetermined range based on a total weight of the ion conductor dispersion composition.

Based on the total weight of the ion conductor dispersion composition, a lower limit of the eco-friendly additive solvent may be about 3 wt%, 4 wt%, 5 wt%, 6 wt%, 7 wt%, 8 wt%, 9 wt%, 10 wt%, 11 wt%, 12 wt%, 13 wt%, 14 wt%, or 15 wt%, and an upper limit thereof may be about 20 wt%, 19 wt%, 18 wt%, 17 wt%, 16 wt%, 15 wt%, 14 wt%, 13 wt%, 12 wt%, 11 wt%, 10 wt%, 9 wt%, 8 wt%, 7 wt%, or 6 wt%.

Based on the total weight of the ion conductor dispersion composition, the eco-friendly additive solvent may be greater than or equal to or greater than any one lower limit among the above-described lower limits; may be less than or equal to or less than any one upper limit among the above-described upper limits; or may have a range of greater than or equal to or greater than any one lower limit among the above-described lower limits and less than or equal to or less than any one upper limit among the above-described upper limits.

The solvent may be included within a predetermined range with respect to 100 parts by weight of the eco-friendly additive solvent.

For example, based on 100 parts by weight of the eco-friendly additive solvent, a lower limit of the solvent may be about 180 parts by weight, 190 parts by weight, 200 parts by weight, 210 parts by weight, 220 parts by weight, 230 parts by weight, 240 parts by weight, 250 parts by weight, 260 parts by weight, 270 parts by weight, 280 parts by weight, 290 parts by weight, 300 parts by weight, 400 parts by weight, 500 parts by weight, 600 parts by weight, 700 parts by weight, 800 parts by weight, or 900 parts by weight, and an upper limit of the solvent may be about 1000 parts by weight, 990 parts by weight, 980 parts by weight, 970 parts by weight, 960 parts by weight, 950 parts by weight, 940 parts by weight, 930 parts by weight, 920 parts by weight, 910 parts by weight, 900 parts by weight, 800 parts by weight, 700 parts by weight, 600 parts by weight, 500 parts by weight, 400 parts by weight, 300 parts by weight, 290 parts by weight, 280 parts by weight, 270 parts by weight, 260 parts by weight, 250 parts by weight, or 240 parts by weight.

Based on 100 parts by weight of the eco-friendly additive solvent, the solvent may be greater than or equal to, or greater than any one of the above-described lower limits; may be less than or equal to, or less than any one of the above-described upper limits; or may have a range of greater than or equal to, or greater than any one of the above-described lower limits and less than or equal to, or less than any one of the above-described upper limits.

In addition, the non-solvent may be included within a predetermined range with respect to 100 parts by weight of the eco-friendly additive solvent.

Based on to 100 parts by weight of the eco-friendly additive solvent, a lower limit of the non-solvent may be about 100 parts by weight, 105 parts by weight, 110 parts by weight, 115 parts by weight, 120 parts by weight, 125 parts by weight, 130 parts by weight, 135 parts by weight, 140 parts by weight, 145 parts by weight, 150 parts by weight, 160 parts by weight, 170 parts by weight, 180 parts by weight, 190 parts by weight, 200 parts by weight, 250 parts by weight, 300 parts by weight, 350 parts by weight, or 400 parts by weight, and an upper limit thereof may be about 500 parts by weight, 490 parts by weight, 480 parts by weight, 470 parts by weight, 460 parts by weight, 450 parts by weight, 440 parts by weight, 430 parts by weight, 420 parts by weight, 410 parts by weight, 400 parts by weight, 300 parts by weight, 200 parts by weight, or 150 parts by weight.

Based on 100 parts by weight of the eco-friendly additive solvent, the non-solvent may be greater than or equal to, or greater than any one of the above-described lower limits; may be less than or equal to, or less than any one of the above-described upper limits; or may have a range of greater than or equal to, or greater than any one of the above-described lower limits and less than or equal to, or less than any one of the above-described upper limits.

When the solvent, the eco-friendly additive solvent, and the non-solvent are included in a weight ratio within the above-described range, the above-described distance Rₐ may be satisfied, and accordingly, the object of the present disclosure may be achieved.

Although the ion conductor dispersion composition is a ternary mixture, a viscosity thereof may be within a predetermined range. The method of measuring the viscosity is according to the method described in the "Viscosity Measurement" of Evaluation Example 1 below.

A lower limit of the viscosity may be about 200 cP, 210 cP, 220 cP, 230 cP, 240 cP, 250 cP, 260 cP, 270 cP, 280 cP, 290 cP, 300 cP, 350 cP, 400 cP, 450 cP, 500 cP, 600 cP, 700 cP, 800 cP, 900 cP, or 1000 cP, and an upper limit thereof is not particularly limited, but may be about 1100 cP, 1000 cP, 950 cP, 900 cP, 850 cP, 800 cP, 750 cP, 700 cP, 650 cP, 600 cP, 550 cP, 500 cP, 400 cP, 350 cP, 300 cP, 290 cP, 280 cP, 270 cP, 260 cP, or 250 cP.

The viscosity may be greater than or equal to, or greater than any one of the lower limits described above; may be less than or equal to, or less than any one of the upper limits described above; or may have a range of greater than or equal to, or greater than any one of the lower limits described above and less than or equal to, or less than any one upper limit of the upper limits described above. When the ion conductor dispersion composition has a viscosity within the above-described range, the composition may be impregnated into the support without a decrease in the degree of impregnation during the manufacture of a reinforced composite membrane.

In addition, the ion conductor dispersion composition may have excellent impregnability. The impregnability may be represented by a rate of change in a contact angle of the ion conductor dispersion composition with respect to the support. The rate of change in the contact angle of the ion conductor dispersion composition with respect to the support may be calculated according to Equation 1 below. [Equation 1] $Rate of change in a contact angle with respect to a support = \left(a-b\right) / a \times 100$

In Equation 1, a is a contact angle with respect to the support when the ion conductor dispersion composition is dropped onto the support for the 1st time, and b is a contact angle with respect to the support when the ion conductor dispersion composition is dropped onto the support for the 200th time.

The measurement methods for a and b follow the method described in the "Measurement of contact angle of ion conductor dispersion composition with respect to support" of Evaluation Example 2 below.

A lower limit of the rate of change in the contact angle with respect to the support may be about 30%, 35%, 40%, 45%, 50%, or 55%, and an upper limit thereof may be about 60%, 59%, 58%, 57%, 56%, 55%, 54%, 53%, 52%, 51%, 50%, 49%, 48%, 47%, 46%, 45%, 44%, 43%, 42%, 41%, 40%, 39%, 38%, 37%, 36%, or 35%.

The rate of change in the contact angle with respect to the support may be less than or equal to, or less than any one of the upper limits described above; or may have a range of greater than or equal to, or greater than any one of the lower limits described above and less than or equal to, or less than any one of the upper limits described above. When the rate of change in a contact angle with respect to the support is within the above range, a degree of impregnation and an impregnation speed with respect to the support may be appropriately secured, and application to a pilot facility later may be easy.

The ion conductor dispersion particle size in the ion conductor dispersion composition may be within a predetermined range. A measuring method of the ion conductor dispersion particle size follows a method described in the "Measurement of dispersion particle size" of Evaluation Example 3 below.

A lower limit of the ion conductor dispersion particle size may be about 500 nm, 550 nm, 600 nm, 650 nm, 700 nm, 750 nm, 800 nm, 850 nm, 900 nm, 950 nm, 1000 nm, 1050 nm, 1100 nm, 1150 nm, 1200 nm, 1250 nm, 1300 nm, 1350 nm, or 1400 nm, and an upper limit thereof may be about 2000 nm, 1900 nm, 1800 nm, 1700 nm, 1600 nm, 1500 nm, 1400 nm, 1300 nm, 1200 nm, 1100 nm, 1000 nm, 900 nm, 800 nm, or 750 nm.

The ion conductor dispersion particle size in the ion conductor dispersion composition may be greater than or equal to, or greater than any one of the lower limits described above; may be less than or equal to, or less than any one of the upper limits described above; or may have a range of greater than or equal to, or greater than any one of the lower limits described above and less than or equal to, or less than any one of the upper limits described above. When dispersion particles of the ion conductor in the ion conductor dispersion composition are within the above-described range, impregnation into the support is facilitated, and a density of a surface of the polymer electrolyte membrane may be increased.

In addition, the ion conductor in the ion conductor dispersion composition may have a polydispersity index within a predetermined range. As the polydispersity index is closer to 1, it refers to that a dispersion particle size distribution is relatively wide, and as the polydispersity index is closer to 1, a Brownian motion occurs slowly, thereby mitigating particle aggregation in the ion conductor dispersion composition, and thus stability and impregnability of the ion conductor dispersion composition may increase, and the mechanical strength of the polymer electrolyte membrane may increase. The measurement method for the polydispersity index follows the method described in the "Measurement of dispersion particle size" of Evaluation Example 3 below.

A lower limit of the polydispersity index may be about 0.9, 0.91, 0.92, 0.93, 0.94, 0.95, 0.96, 0.97, 0.98, 0.99, 1, 1.05, 1.1, 1.15, 1.2, 1.25, 1.3, 1.35, 1.4, 1.45, 1.5, 1.6, or 1.65, and an upper limit thereof may be about 1.5, 1.45, 1.4, 1.35, 1.3, 1.25, 1.2, 1.15, 1.1, 1.05, 1, 0.95, 0.9, or 0.85.

The polydispersity index may be greater than or equal to, or greater than any one of the above-described lower limits; may be less than or equal to, or less than any one of the above-described upper limits; or may have a range of greater than or equal to, or greater than any one of the above-described lower limits and less than or equal to, or less than any one of the above-described upper limits. When the polydispersity index of the ion conductor in the ion conductor dispersion composition is within the above-described range, stability, impregnability, and mechanical strength of the polymer electrolyte membrane may be increased as described above.

The ion conductor dispersion composition may have a surface tension value similar to or higher than that of one to which an existing chemistry-based solvent is applied. For example, the ion conductor dispersion composition may have a surface tension within a predetermined range. The method of measuring the surface tension follows a method described in the "Surface Tension Evaluation" of Evaluation Example 4 below.

A lower limit of the surface tension may be about 25 mN/m, 25.5 mN/m, 26 mN/m, 26.5 mN/m, 27 mN/m, 27.5 mN/m, 28 mN/m, 28.5 mN/m, or 29 mN/m, and an upper limit thereof is not particularly limited, but may be about 30 mN/m, 29.5 mN/m, 29 mN/m, 28.5 mN/m, 28 mN/m, or 27.5 mN/m.

The surface tension may be greater than or equal to, or greater than any one of the above-described lower limits; may be less than or equal to, or less than any one of the above-described upper limits; or may have a range of greater than or equal to, or greater than any one of the above-described lower limits and less than or equal to, or less than any one of the above-described upper limits. As the surface tension value of the ion conductor dispersion composition falls within the above-described range, it may be uniformly dispersed in a polymer.

The fact that the surface tension has a value similar to or higher than that of one using an existing chemistry-based solvent is described in the "Surface Tension Evaluation" of Evaluation Example 4, and a measurement result according thereto is shown in Table 8.

### 2. Method of manufacturing a polymer electrolyte membrane

According to another embodiment of the present disclosure, a method of manufacturing a polymer electrolyte membrane comprises mixing an ion conductor with a solvent to prepare a first mixture, adding an eco-friendly additive solvent to the first mixture and mixing to prepare a second mixture, adding a non-solvent to the second mixture and mixing to prepare an ion conductor dispersion composition, and manufacturing a polymer electrolyte membrane by coating the ion conductor dispersion composition on a substrate and then performing drying and heat treatment.

In this case, the eco-friendly additive solvent satisfies respective ranges of the dispersion term, the polar term, and the hydrogen bonding term of the Hansen solubility parameter as described above.

In addition, specific types of the ion conductor, the solvent, and the non-solvent are as follows "1. the same as those described in "Ion conductor dispersion composition".

The type of the substrate is not limited, as long as the substrate has releasability. For example, the substrate may be a polyethylene terephthalate (PET) film, a cyclic olefin copolymer (COC) film, a polyacrylate (PAC) film, a polycarbonate (PC) film, a polyethylene (PE) film, a polymethylmethacrylate (PMMA) film, a polyetheretherketone (PEEK) film, a polyethylenenaphthalate (PEN) film, a polyetherimide (PEI) film, a polyimide (PI) film, a triacetylcellulose (TAC) film, or a combination thereof.

The coating may be performed according to a known method. For example, the coating may be performed by an electrospinning, direct casting, dip coating, spray coating, spin coating, die coating, roll coating, slot-die coating, bar coating, gravure coating, comma coating, curtain coating, or micro-gravure coating method.

The drying may be performed under a temperature in a range of 60°C to 120°C.

The heat treatment may be appropriately adjusted according to the type of the ion conductor included in the ion conductor dispersion composition.

For example, when a fluorine-based ion conductor is used, it may be performed under a temperature in a range of 150°C to 220°C, and when a hydrocarbon-based ion conductor is used, it may be performed under a temperature in a range of 80°C to 500°C.

The method of manufacturing a polymer electrolyte membrane may further comprise, after coating the ion conductor dispersion composition on the substrate and before the drying and the heat treatment, placing a porous support on the substrate coated with the ion conductor dispersion composition, and coating the ion conductor dispersion composition again on the porous support.

The polymer electrolyte membrane may also be manufactured as a reinforced membrane having a form in which the ion conductor fills the pores of the porous support, by placing the porous support and coating the ion conductor dispersion composition again on the porous support.

The porous support may be a fluorine-based support or a nano web support.

The fluorine-based support may correspond to, for example, expanded polytetrafluoroethylene (e-PTFE) having a microstructure of polymer fibrils, or a microstructure in which nodes are connected to each other by the fibrils. In addition, a film having a microstructure of polymer fibrils in which the nodes do not exist may also be used as the porous support.

The nano web support may be a support in which nano fibers are integrated into a non-woven fabric form including a plurality of pores.

### 3. Polymer electrolyte membrane

A polymer electrolyte membrane according to another embodiment of the present disclosure may comprise a porous support having porous pores, and an ion conductor filling the pores of the porous support.

The porous support is as follows "2. Method of manufacturing a polymer electrolyte membrane".

The polymer electrolyte membrane, which is manufactured using the above-described ion conductor dispersion composition, may exhibit improved electrochemical and mechanical stability.

The polymer electrolyte membrane may have excellent transmittance. The transmittance may be represented by a total light transmittance (T.t). The method of measuring the transmittance follows a method described in the "Evaluation of total light transmittance (T.t) and transparency (haze)" of Evaluation Example 5 below.

For example, the total light transmittance (T.t) of the polymer electrolyte membrane may be within a predetermined range.

A lower limit of the total light transmittance (T.t) may be about 90%, 90.2%, 90.4%, 90.6%, 90.8%, 91%, 91.2%, 91.4%, 91.6%, 91.8%, 92%, 92.2%, 92.4%, 92.6%, 92.8%, 93%, 93.2%, or 93.4%, and an upper limit thereof may be about 100%, 99%, 98%, 97%, 96%, 95%, 94.5%, 94%, 93.5%, 93%, 92.5%, or 92%.

The total light transmittance (T.t) of the polymer electrolyte membrane may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits and less than or equal to, or less than any one upper limit among the above-described upper limits. When the total light transmittance (T.t) of the polymer electrolyte membrane is within the above range, the degree of impregnation into the support may be excellent.

The transparency (haze) of the polymer electrolyte membrane is characterized by being 0.1% to 10%. The method of measuring the transparency is according to the method described in the "evaluation of total light transmittance (T.t) and transparency (haze)" of Evaluation Example 5 below. For example, a lower limit of the transparency (haze) may be about 0.1%, 0.5%, 1%, 1.5%, 2%, 2.5%, 3%, 3.1%, 3.2%, 3.3%, 3.4%, 3.5%, 3.6%, 3.7%, 3.8%, 3.9%, 4%, 4.1%, 4.2%, 4.3%, 4.4%, 4.5%, 4.6%, 4.7%, 4.8%, 4.9%, 5%, 5.1%, 5.2%, 5.3%, or 5.4%, and an upper limit thereof may be about 10%, 9.5%, 9%, 8.5%, 8%, 7.5%, 7%, 6.5%, 6%, 5.5%, 5.4%, 5.3%, 5.2%, 5.1%, 5%, 4.9%, 4.8%, 4.7%, 4.6%, 4.5%, 4.4%, 4.3%, or 4.2%.

The transparency (haze) of the polymer electrolyte membrane may be greater than or equal to, or greater than any one lower limit among the above-described lower limits; may be less than or equal to, or less than any one upper limit among the above-described upper limits; or may have a range of greater than or equal to, or greater than any one lower limit among the above-described lower limits, and less than or equal to, or less than any one upper limit among the above-described upper limits. When the transparency of the polymer electrolyte membrane is within the range, light scattering occurs less when forming the polymer electrolyte membrane, so that a uniform polymer electrolyte membrane may be manufactured.

The fact that the transparency (haze) exhibits an excellent effect compared to using an existing chemistry-based solvent is described in the "evaluation of total light transmittance (T.t) and transparency (haze)" of Evaluation Example 5, and a measurement result according thereto is shown in Table 9.

In addition, the polymer electrolyte membrane may have excellent mechanical strength.

For example, in the polymer electrolyte membrane, a tensile strength in a machine direction (MD) and a tensile strength in a transverse direction (TD) may each be within a predetermined range. The method of measuring the tensile strength in the machine direction (MD) and the transverse direction (TD) follows the method described in the "measurement of tensile strength and elongation" of Evaluation Example 6 below.

A lower limit of the tensile strength in the machine direction (MD) may be about 35 MPa, 36 MPa, 37 MPa, 38 MPa, 39 MPa, 40 MPa, or 41 MPa, and an upper limit thereof is not limited, but may be about 50 MPa, 49 MPa, 48 MPa, 47 MPa, 46 MPa, 45 MPa, 44 MPa, 43 MPa, 42 MPa, 41 MPa, 40 MPa, 39 MPa, 38 MPa, 37 MPa, or 36 MPa.

A lower limit of the tensile strength in the transverse direction (TD) may be about 30 MPa, 30.5 MPa, 31 MPa, 31.5 MPa, 32 MPa, 32.5 MPa, 33 MPa, 33.5 MPa, 34 MPa, 34.5 MPa, 35 MPa, or 35.5 MPa, and an upper limit thereof is not limited, but may be about 40 MPa, 39 MPa, 38 MPa, 37 MPa, 36 MPa, 35 MPa, 34 MPa, or 33 MPa.

Each of the tensile strengths in the machine direction (MD) and the transverse direction (TD) may be greater than or equal to, or greater than any one of the above-described lower limits; or may have a range of greater than or equal to, or greater than any one of the above-described lower limits, and less than or equal to, or less than any one of the above-described upper limits. When the tensile strength in the machine direction and the tensile strength in the transverse direction of the polymer electrolyte membrane are within the ranges, both in-plane direction and through-plane direction strengths may be excellent.

In addition, in the polymer electrolyte membrane, the absolute value of a difference between the elongation in the machine direction (MD) and the elongation in the transverse direction (TD) may be within a predetermined range. A smaller absolute value of a difference between the elongation in the machine direction (MD) and the elongation in the transverse direction (TD) of the polymer electrolyte membrane refers to being more isotropic, and the more isotropic it is, the more the shape and dimensions of the polymer electrolyte membrane may be maintained and durability may be improved under various loads and environmental conditions occurring during assembly of a water electrolysis cell. The method of measuring the elongation in the machine direction (MD) and the elongation in the transverse direction (TD) is according to the method described in the "Measurement of tensile strength and elongation" of Evaluation Example 6 below.

A lower limit of the absolute value of a difference between the elongation in the machine direction (MD) and the elongation in the transverse direction (TD) is not limited, but for example, may be about 0%, 5%, 10%, 15%, 20%, 30%, 40%, 50%, 60%, or 70%, and an upper limit thereof may be about 50%, 45%, 40%, 35%, 30%, or 25%.

The absolute value of a difference between the elongation in the machine direction (MD) and the elongation in the transverse direction (TD) may be less than or equal to, or less than any one of the above-described upper limits; or may have a range of greater than or equal to, or greater than any one of the above-described lower limits, and less than or equal to, or less than any one of the above-described upper limits. When the absolute value of a difference between the elongation in the machine direction (MD) and the elongation in the transverse direction (TD) of the polymer electrolyte membrane is within the range, the shape and dimensions of the polymer electrolyte membrane may be maintained and durability may be improved under various loads and environmental conditions occurring during assembly of a water electrolysis cell.

The polymer electrolyte membrane may have excellent wet expansion rates in both the in-plane and through-plane directions at room temperature and high temperature compared to a membrane prepared using an existing chemical-based solvent. The method of measuring the in-plane and through-plane direction wet expansion rates follows the method described in the "Measurement of wet expansion rate and water absorption rate" of Evaluation Example 7 below.

In this case, the room temperature may refer to a temperature of 15°C to 25°C. For example, a lower limit of the room temperature may be 15°C, 16°C, 17°C, 18°C, 19°C, or 20°C, and an upper limit of the room temperature may be 25°C, 24°C, 23°C, 22°C, 21°C, or 20°C. The room temperature may refer to a temperature that is greater than or equal to, or greater than any one of the above-described lower limits, and is less than or equal to, or less than any one of the above-described upper limits.

In addition, the high temperature may refer to a temperature that is greater than or equal to 75°C. For example, a lower limit of the high temperature may be 75°C, 76°C, 77°C, 78°C, 79°C, or 80°C, and an upper limit of the high temperature is not limited, but may be, for example, 100°C, 95°C, 90°C, or 85°C. The high temperature may refer to a temperature that is greater than or equal to, or greater than any one of the above-described lower limits, or is greater than or equal to, or greater than any one of the above-described lower limits and is less than or equal to, or less than any one of the above-described upper limits.

The polymer electrolyte membrane may have an in-plane wet expansion rate measured at the room temperature of less than or equal to 20%. As a preferred example, the in-plane wet expansion rate measured at the room temperature may be measured at 20°C. For example, a lower limit of the in-plane wet expansion rate measured at the room temperature is not limited, but may be, for example, about 13.5%, 14%, 14.5%, 15%, 15.5%, 16%, 16.5%, 17%, 17.5%, or 18%, and an upper limit thereof may be about 20%, 19%, 18%, 17%, 16%, or 15.5%.

The in-plane wet expansion rate measured at the room temperature may be greater than or equal to, or greater than any one of the above-described lower limits; or may have a range of greater than or equal to, or greater than any one of the above-described lower limits and less than or equal to, or less than any one of the above-described upper limits.

The polymer electrolyte membrane may have an in-plane wet expansion rate measured at the high temperature of less than or equal to 40%. As a preferred example, the in-plane wet expansion rate measured at the high temperature may be measured at 80°C. For example, a lower limit of the in-plane wet expansion rate measured at the high temperature is not limited, but may be, for example, about 25%, 26%, 27%, 28%, 29%, 30%, 31%, 32%, 33%, 34%, 35%, 36%, 37%, 38%, or 38.5%, and an upper limit thereof may be about 40%, 39%, 38%, 37%, 36%, or 35%.

The in-plane wet expansion rate measured at the high temperature may have a range that is greater than or equal to, or greater than any one of the above-described lower limits; or is greater than or equal to, or greater than any one of the above-described lower limits and is less than or equal to, or less than any one of the above-described upper limits. When the in-plane wet expansion rate measured at the high temperature is within the above-described range, shapes of the polymer electrolyte membrane and an electrode positioned on the polymer electrolyte membrane may be maintained even during a water electrolysis operation, and durability may be improved.

The polymer electrolyte membrane may have a through-plane direction wet expansion rate measured at the room temperature of less than or equal to 30%. As a preferred example, the through-plane direction wet expansion rate measured at the room temperature may be measured at 20°C. For example, a lower limit of the through-plane direction wet expansion rate measured at the room temperature is not limited, but may be, for example, greater than or equal to 20%, and an upper limit thereof may be about 25%, 24%, 23%, 22%, 21%, or 20%.

The through-plane direction wet expansion rate measured at the room temperature may have a range that is greater than or equal to, or greater than any one of the above-described lower limits; or is greater than or equal to, or greater than any one of the above-described lower limits and is less than or equal to, or less than any one of the above-described upper limits.

The polymer electrolyte membrane may have a through-plane direction wet expansion rate measured at the high temperature of less than or equal to 50%. As a preferred example, the through-plane direction wet expansion rate measured at the high temperature may be measured at 80°C. For example, a lower limit of the through-plane direction wet expansion rate measured at the high temperature is not limited, but may be, for example, about 20%, 23%, 30%, 32%, 40%, 42%, 43%, or 49%, and an upper limit thereof may be about 60%, 50%, 49%, 44%, 43%, 33%, 31%, 30%, or 24%.

The through-plane direction wet expansion rate measured at the high temperature may be greater than or equal to, or greater than any one of the above-described lower limits; or may have a range of greater than or equal to, or greater than any one of the above-described lower limits and less than or equal to, or less than any one of the above-described upper limits. When the through-plane direction wet expansion rate measured at the high temperature is within the range, shapes of the polymer electrolyte membrane and an electrode positioned on the polymer electrolyte membrane may be maintained even during water electrolysis operation, and durability may be improved.

The polymer electrolyte membrane may have excellent water absorption rates at room temperature and high temperature. The method of measuring the water absorption rate is according to the method described in the "measurement of wet expansion rate and water absorption rate" of Evaluation Example 7 below. The temperature ranges of the room temperature and the high temperature are as described in the in-plane direction and through-plane direction wet expansion rates.

For example, the polymer electrolyte membrane may have a water absorption rate measured at the room temperature within a predetermined range. As a preferred example, the water absorption rate measured at the room temperature may be measured at 20°C.

A lower limit of the water absorption rate may be about 20%, 21%, 22%, 23%, 24%, 25%, 26%, 27%, 28%, 29%, 30%, 35%, or 40%, and an upper limit thereof is not limited, but may be about 50%, 49%, 48%, 47%, 46%, 45%, 44%, 43%, 40%, 35%, or 30%.

The water absorption rate measured at the room temperature may be greater than or equal to, or greater than any one of the above-described lower limits; or may have a range of being greater than or equal to, or greater than any one of the above-described lower limits and being less than or equal to, or less than any one of the above-described upper limits.

In addition, the polymer electrolyte membrane may have a water absorption rate measured at the high temperature within a predetermined range. As a preferred example, the water absorption rate measured at the high temperature may be measured at 80°C.

A lower limit of the water absorption rate may be about 20%, 25%, 30%, 35%, 40%, 45%, or 50%, and an upper limit thereof is not limited, but may be about 60%, 55%, 50%, or 45%.

The water absorption rate measured at the high temperature may be greater than or equal to, or greater than any one of the above-described lower limits; or may have a range of being greater than or equal to, or greater than any one of the above-described lower limits and being less than or equal to, or less than any one of the above-described upper limits.

In addition, the polymer electrolyte membrane may have equivalent or superior in-plane direction and through-plane direction hydrogen ion conductivities compared to a polymer electrolyte membrane to which an existing chemistry-based solvent is applied. The method of measuring the in-plane direction and through-plane direction hydrogen ion conductivities is according to the method described in the "measurement of hydrogen ion conductivity" of Evaluation Example 8 below. The in-plane direction and through-plane direction hydrogen ion conductivities may be measured at four different temperatures. For example, they may be measured at a first temperature, a second temperature, a third temperature, and a fourth temperature, respectively.

The first temperature may be a temperature within a range of 15°C to 25°C. For example, a lower limit of the first temperature may be 15°C, 16°C, 17°C, 18°C, 19°C, or 20°C, and an upper limit of the first temperature may be 25°C, 24°C, 23°C, 22°C, 21°C, or 20°C. The first temperature may be a temperature that is greater than or equal to, or greater than any one lower limit among the above-described lower limits, and is less than or equal to, or less than any one upper limit among the above-described upper limits.

The second temperature may be a temperature in a range of 35°C to 45°C. For example, a lower limit of the second temperature may be 35°C, 36°C, 37°C, 38°C, 39°C, or 40°C, and an upper limit of the second temperature may be 45°C, 44°C, 43°C, 42°C, 41°C, or 40°C. The second temperature may be a temperature that is greater than or equal to, or greater than any one lower limit among the above-described lower limits, and is less than or equal to, or less than any one upper limit among the above-described upper limits.

The third temperature may be a temperature in a range of 55°C to 65°C. For example, a lower limit of the third temperature may be 55°C, 56°C, 57°C, 58°C, 59°C, or 50°C, and an upper limit of the third temperature may be 55°C, 54°C, 53°C, 52°C, 51°C, or 50°C. The third temperature may be a temperature that is greater than or equal to, or greater than any one lower limit among the above-described lower limits, and is less than or equal to, or less than any one upper limit among the above-described upper limits.

The fourth temperature may be a temperature in a range of 75°C to 85°C. For example, a lower limit of the fourth temperature may be 75°C, 76°C, 77°C, 78°C, 79°C, or 80°C, and an upper limit of the fourth temperature may be 85°C, 84°C, 83°C, 82°C, 81°C, or 80°C. The fourth temperature may be a temperature greater than or equal to, or greater than any one lower limit among the above-described lower limits, and less than or equal to, or less than any one upper limit among the above-described upper limits.

In the polymer electrolyte membrane, the in-plane direction and through-plane direction hydrogen ion conductivities measured under a condition of being immersed in water at the first temperature may each be within a predetermined range. As a preferred example, the hydrogen ion conductivity measured at the first temperature may be measured at 20°C.

For example, a lower limit of the in-plane direction and through-plane direction hydrogen ion conductivities measured under the condition of being immersed in water at the first temperature may be about 0.05 S/cm, 0.06 S/cm, 0.07 S/cm, 0.08 S/cm, 0.09 S/cm, 0.1 S/cm, 0.11 S/cm, 0.12 S/cm, 0.13 S/cm, 0.14 S/cm, or 0.15 S/cm, and an upper limit thereof is not limited, but for example, may be about 0.2 S/cm, 0.19 S/cm, 0.18 S/cm, 0.17 S/cm, 0.16 S/cm, 0.15 S/cm, 0.14 S/cm, 0.13 S/cm, 0.12 S/cm, 0.11 S/cm, or 0.1 S/cm.

In the polymer electrolyte membrane, the in-plane direction and through-plane direction hydrogen ion conductivities measured under a condition of being immersed in water at the second temperature may each be within a predetermined range. As a preferred example, the hydrogen ion conductivity measured at the second temperature may be measured at 40°C.

For example, a lower limit of the in-plane direction and through-plane direction hydrogen ion conductivities measured under the condition of being immersed in water at the second temperature may be about 0.1 S/cm, 0.12 S/cm, 0.13 S/cm, 0.14 S/cm, or 0.15 S/cm, and an upper limit thereof is not limited, but for example, may be about 0.3 S/cm, 0.25 S/cm, 0.2 S/cm, 0.19 S/cm, 0.18 S/cm, 0.17 S/cm, 0.16 S/cm, 0.15 S/cm, or 0.14 S/cm.

In the polymer electrolyte membrane, the in-plane direction and through-plane direction hydrogen ion conductivities measured under a condition of being immersed in water at the third temperature may each be within a predetermined range. As a preferred example, the hydrogen ion conductivity measured at the third temperature may be measured at 60°C.

For example, a lower limit of the in-plane direction and through-plane direction hydrogen ion conductivities measured under the condition of being immersed in water at the third temperature may be about 0.15 S/cm, 0.16 S/cm, 0.17 S/cm, 0.18 S/cm, 0.19 S/cm, 0.2 S/cm, 0.21 S/cm, 0.22 S/cm, 0.23 S/cm, 0.24 S/cm, or 0.25 S/cm, and an upper limit thereof is not limited, but may be about 0.4 S/cm, 0.35 S/cm, 0.3 S/cm, 0.25 S/cm, 0.2 S/cm, or 0.19 S/cm.

In the polymer electrolyte membrane, hydrogen ion conductivities in an in-plane direction and a through-plane direction measured under a condition of being immersed in water at the fourth temperature may each be within a predetermined range. As a preferred example, the hydrogen ion conductivity measured at the fourth temperature may be measured at 80°C.

For example, a lower limit of the hydrogen ion conductivities in the in-plane direction and the through-plane direction measured under the condition of being immersed in water at the fourth temperature may be about 0.2 S/cm, 0.21 S/cm, 0.22 S/cm, 0.23 S/cm, 0.24 S/cm, 0.25 S/cm, 0.26 S/cm, 0.27 S/cm, 0.28 S/cm, 0.29 S/cm, 0.3 S/cm, 0.31 S/cm, 0.32 S/cm, 0.33 S/cm, 0.34 S/cm, 0.35 S/cm, 0.36 S/cm, or 0.37 S/cm, and an upper limit thereof is not limited, but may be about 0.5 S/cm, 0.45 S/cm, 0.4 S/cm, 0.35 S/cm, 0.3 S/cm, or 0.25 S/cm.

The hydrogen ion conductivities in the in-plane direction and the through-plane direction measured at each of the first temperature, the second temperature, the third temperature, and the fourth temperature and under the condition of being immersed in water may each be greater than or equal to, or greater than any one lower limit among the above-described lower limits; or may have a range of greater than or equal to, or greater than any one lower limit among the above-described lower limits and less than or equal to, or less than any one upper limit among the above-described upper limits.

The polymer electrolyte membrane may have hydrogen ion conductivities in the in-plane direction and the through-plane direction measured at the first temperature, the second temperature, the third temperature, and the fourth temperature within the above-described range, such that the hydrogen ion conductivities may be equal to or superior to those obtained when an existing chemistry-based solvent is applied, even when the eco-friendly additive solvent is applied instead of an existing chemistry-based solvent. By having the ion conductivity in the in-plane direction within the above-described range, the polymer electrolyte membrane may enhance the ion transfer ability of a membrane-electrode assembly.

In addition, a density of the polymer electrolyte membrane may be 1.85 g/cm³ to 2.5 g/cm³, and for example, may be 1.85 g/cm³ to 2 g/cm³, or 1.9 g/cm³ to 2 g/cm³. The method of measuring the density follows a method described in the "Density Evaluation" of Evaluation Example 9 below. In a polymer electrolyte membrane having the same thickness, a higher density provides higher impregnability and a higher mass transfer diffusion coefficient, which is advantageous. The density of the polymer electrolyte membrane may be higher than that when an existing chemistry-based solvent is applied.

An in-plane direction compressive resistance of the polymer electrolyte membrane may be greater than or equal to 35 N, and for example, may be 35 N to 50 N, or 35 N to 48 N. A method of measuring the in-plane direction compressive resistance follows a method described in the "In-plane Direction Compressive Resistance Measurement" of Evaluation Example 10 below. The polymer electrolyte membrane has an in-plane direction compressive resistance value within the above-described range, and thus the shape of the polymer electrolyte membrane may be maintained under a load applied during cell fastening, compared to a polymer electrolyte membrane to which an existing chemistry-based solvent is applied.

Such a polymer electrolyte membrane may be applied to a polymer electrolyte membrane fuel cell and a polymer electrolyte membrane water electrolysis cell.

### 4. 1. Membrane-Electrode Assembly and Electrochemical Cell

A membrane-electrode assembly according to another embodiment of the present disclosure comprises: a polymer electrolyte membrane; a hydrogen electrode positioned on one surface of the polymer electrolyte membrane; and an air electrode positioned on the other surface of the polymer electrolyte membrane.

The membrane-electrode assembly may be applied to a fuel cell or a water electrolysis cell.

When the membrane-electrode assembly is applied to a fuel cell, the hydrogen electrode refers to an electrode that supplies hydrogen gas (fuel), and the air electrode refers to an electrode that supplies air and generates water.

Since known ones may be used for the hydrogen electrode and the air electrode when the membrane-electrode assembly is applied to a fuel cell, a detailed description thereof will be omitted.

Meanwhile, when the membrane-electrode assembly is applied to a water electrolysis cell, the air electrode refers to an electrode that supplies water (fuel) and generates oxygen gas, and the hydrogen electrode refers to an electrode that generates hydrogen gas.

The hydrogen electrode and the air electrode in the case where the membrane-electrode assembly is applied to a water electrolysis cell are described below.

The air electrode is an electrode in which an oxygen evolution reaction (OER) occurs.

The hydrogen electrode may comprise a catalyst layer for a hydrogen electrode.

The catalyst layer for a hydrogen electrode may comprise a precious metal oxide.

The precious metal oxide may be iridium oxide, an oxide of an iridium alloy, or a combination thereof.

For example, the precious metal oxide may be IrOₓ (wherein x is an integer of 1 to 3), IrMOₓ (wherein M includes Ru, Pt, Sn, Se, Zn, Au, Te, Nb, or a combination thereof, and the x is an integer of 1 to 3), or a combination thereof.

In addition, the catalyst layer for a hydrogen electrode may further comprise a support supporting the precious metal oxide.

The support is not limited in its type as long as it is generally applied as a support supporting a precious metal oxide, and for example, may be titanium dioxide (TiO₂).

The hydrogen electrode may further comprise an ion conductor for improving adhesion of the catalyst layer and for hydrogen ion transfer.

The ion conductor is as follows "1. Ion conductor dispersion composition".

The ion conductor included in the hydrogen electrode and the ion conductor included in the polymer electrolyte membrane may be the same or different.

The hydrogen electrode is an electrode in which a hydrogen evolution reaction (HER) occurs.

The air electrode may comprise a catalyst layer for an air electrode.

The catalyst layer for an air electrode is different from the catalyst layer of the hydrogen electrode.

The catalyst layer for an air electrode may comprise active particles.

The active particles may comprise a precious metal, and the precious metal may be a platinum-based precious metal.

As the platinum-based precious metal, platinum (Pt) and/or a Pt-M alloy may be used. The M may be palladium (Pd), ruthenium (Ru), iridium (Ir), osmium (Os), gallium (Ga), titanium (Ti), vanadium (V), chromium (Cr), manganese (Mn), iron (Fe), cobalt (Co), nickel (Ni), copper (Cu), silver (Ag), gold (Au), zinc (Zn), tin (Sn), molybdenum (Mo), tungsten (W), lanthanum (La), or rhodium (Rh).

Specifically, as the Pt-M alloy, Pt-Pd, Pt-Sn, Pt-Mo, Pt-Cr, Pt-W, Pt-Ru, Pt-Ni, Pt-Co, Pt-Y, Pt-Ru-W, Pt-Ru-Ni, Pt-Ru-Mo, Pt-Ru-Rh-Ni, Pt-Ru-Sn-W, Pt-Ru-Ir-Ni, Pt-Co-Mn, Pt-Co-Ni, Pt-Co-Fe, Pt-Co-Ir, Pt-Co-S, Pt-Co-P, Pt-Fe, Pt-Fe-Ir, Pt-Fe-S, Pt-Fe-P, Pt-Au-Co, Pt-Au-Fe, Pt-Au-Ni, Pt-Ni, Pt-Ni-Ir, Pt-Cr, Pt-Cr-Ir, or a mixture thereof may be used.

The catalyst layer for an air electrode may further comprise a support supporting the active particles.

The support may be different from a support applied to the catalyst layer of the hydrogen electrode.

For example, the support may be a carbon-based support.

The carbon-based support may be graphite, super P, carbon fiber, carbon sheet, carbon black, Ketjen Black, Denka black, acetylene black, carbon nanotube (CNT), carbon sphere, carbon ribbon, fullerene, activated carbon, carbon nanofiber, carbon nanowire, carbon nanoball, carbon nanohorn, carbon nanocage, carbon nanoring, ordered nano-/meso-porous carbon, carbon aerogel, mesoporous carbon, graphene, stabilized carbon, activated carbon, or a combination thereof.

The hydrogen electrode and the air electrode may comprise only the catalyst layer for a hydrogen electrode and the catalyst layer for an air electrode, but may comprise an electrode substrate together with the catalyst layer.

The electrode substrate may serve to support an electrode while serving to diffuse fuel and an oxidant to the catalyst layers for a hydrogen electrode and an air electrode.

The electrode substrate may comprise a microporous layer, a porous diffusion layer, or a combination thereof.

The microporous layer serves to enhance a reactant diffusion effect, and may generally include a conductive powder having a small particle size, for example, carbon powder, carbon black, acetylene black, activated carbon, metal oxide nanowire, carbon fiber, fullerene, carbon nano tube, carbon nanowire, carbon nano-horn, or carbon nano ring.

The porous diffusion layer may comprise porous Titnia, carbon paper, carbon cloth, carbon felt, or metal cloth (referring to a porous film constituted by a metal cloth in a fibrous state or a cloth formed of polymer fibers having a metal film formed on a surface thereof).

The microporous layer and the porous diffusion layer may comprise known ones in addition to those exemplified above.

The electrode substrate may use one subjected to a water-repellent treatment with a fluorine-based resin, and in this case, a decrease in reactant diffusion efficiency due to water generated during operation of a water electrolysis cell may be prevented.

As the fluorine-based resin, polytetrafluoroethylene, polyvinylidene fluoride, polyhexafluoropropylene, polyperfluoroalkyl vinyl ether, polyperfluorosulfonyl fluoride, alkoxy vinyl ether, fluorinated ethylene propylene, polychlorotrifluoroethylene, or a copolymer thereof may be used.

According to another embodiment of the present disclosure, an electrochemical cell comprises the membrane-electrode assembly.

The electrochemical cell may be a fuel cell or a water electrolysis cell, and other configurations included in the fuel cell and the water electrolysis cell other than the above-described configurations may use known configurations.

### [Mode for Invention]

Hereinafter, embodiments will be described in detail so that those of ordinary skill in the art to which the present disclosure pertains may easily implement them. However, the present disclosure may be implemented in various different forms and is not limited to the embodiments described herein.

### Preparation Example 1. Ion conductor dispersion composition

Water was put into a reaction vessel, and a PFSA polymer (Solvay, Aquivion) as an ion conductor was added to the water and mixed using an orbital shaker to prepare a first mixture.

A hydrophilic eco-friendly additive solvent or a chemical-based solvent as shown in Table 2 below was added to the first mixture, and the mixture was mixed using a resonant acoustic mixer to prepare a second mixture.

A non-solvent was added to the second mixture, and the mixture was mixed using a resonant acoustic mixer to prepare a third mixture.

The third mixture was subjected to primary bubble removal in an orbital shaker and stored at about 5°C for about 3 days to 15 days to remove secondary bubbles, thereby preparing an ion conductor dispersion composition.

According to Preparation Example 1, the ion conductor dispersion compositions of Preparation Examples 1 to 6 and Preparation Comparative Examples 1 and 2 were prepared as shown in Table 2 below.

**[Table 2]**

| | | Preparation Example 1 | Preparation Example 2 | Preparation Example 3 | Preparation Example 4 | Preparation Example 5 | Preparation Example 6 | Preparation Comparative Example 1 | Preparation ComparativeExample 2 |
|---|---|---|---|---|---|---|---|---|---|
| Ion conducto r (PFSA) | | 25 | 25 | 25 | 25 | 25 | 25 | 25 | 20 |
| Water | | 47.25 | 42 | 36.75 | 47.25 | 42 | 36.75 | 34.615 | 52.3 |
| Eco - frie ndly addi tive solv ent | GB L¹) | 5.25 | 10.5 | 15.75 | - | - | - | - | - |
| | ML 2) | - | - | - | 5.25 | 10.5 | 15.75 | - | - |
| Chemical -based solvent (NMP³⁾) | | - | - | - | - | - | - | 9.616 | - |
| Non-solvent (nPA⁴⁾) | | 22.5 | 22.5 | 22.5 | 22.5 | 22.5 | 22.5 | 30.769 | 27.7 |

| | | | | | | | | | |
|---|---|---|---|---|---|---|---|---|---|
| 1) GBL: gamma-butyrolactone (Sigma-Aldrich, ≥99%)2) ML: methyl L-lactate (Sigma-Aldrich, 98%) 3) NMP: N-methyl-2-pyrrolidone (FUJIFILM Wako Chemical, Duper Dehydrated) 4) nPA: propyl alcohol (Daejung Chemicals & Metals, 99.5%) | | | | | | | | | |

In this case, the inherent Hansen solubility parameters of the ion conductor, water, the eco-friendly additive solvent, the chemical-based solvent, and the non-solvent according to estimated values of the Hansen solubility parameter at 25°C by SMILES of the computer software HANSEN SOLUBILITY PARAMETERS IN PRACTICE (HSPiP) VER 5.2.06 and the software ChemDraw (a function of estimating a Hansen solubility parameter from a molecular structure of a solvent) are as shown in Table 3 below.

**[Table 3]**

| | Hansen solubility parameter | | | |
|---|---|---|---|---|
| | pKa | δ_{d}(MPa^{0.5}) | δₚ(MPa^{0.5}) | δₕ(MPa^{0.5}) |
| Ion conductor | - | 14.9 | 10.2 | 11.8 |
| Water | 14.0 | 15.5 | 16.0 | 42.3 |
| Gamma butyrolactone | 4.5 | 18.0 | 16.6 | 7.4 |
| Methyl L-lactate | 3.8 | 15.8 | 6.5 | 10.2 |
| N-methyl-2-pyrrolidone | 7.8 | 18.0 | 12.3 | 7.2 |
| Propyl alcohol | 16.5 | 16.0 | 6.8 | 17.4 |

First, the Hansen solubility parameter of the mixture was calculated by determining the dispersion term, polar term, and hydrogen bonding term of the mixture using Equations 2-1 to 2-3 below, based on the weight ratio and the Hansen solubility parameter of each component included in the mixture shown in Table 3.

The results are shown in Table 4. [Equation 2-1] ${δ}_{d 2} = \frac{{w}_{1} {δ}_{d , 1} + {w}_{2} {δ}_{d , 2} + {w}_{3} {δ}_{d , 3}}{100}$ [Equation 2-2] ${δ}_{p 2} = \frac{{w}_{1} {δ}_{p , 1} + {w}_{2} {δ}_{p , 2} + {w}_{3} {δ}_{p , 3}}{100}$ [Equation 2-3] ${δ}_{h 2} = \frac{{w}_{1} {δ}_{h , 1} + {w}_{2} {δ}_{h , 2} + {w}_{3} {δ}_{h , 3}}{100}$

In Equations 2-1 to 2-3, δ_{d2} is a dispersion term of the mixture, δₚ₂ is a polar term of the mixture, δₕ₂ is a hydrogen bonding term of the mixture, w₁ is a weight of the solvent, w₂ is a weight of the eco-friendly additive solvent, w₃ is a weight of the non-solvent, δ_{d,1}, δ_{p,1}, and δ_{h,1} are respectively a dispersion term, a polar term, and a hydrogen bonding term of a Hansen solubility parameter of the solvent, δ_{d,2}, δ_{p,2}, and δ_{h,2} are a dispersion term, a polar term, and a hydrogen bonding term of a Hansen solubility parameter of the eco-friendly additive solvent, and δ_{d,3}, δ_{p,3}, and δ_{h,3} are a dispersion term, a polar term, and a hydrogen bonding term of a Hansen solubility parameter of the non-solvent.

Next, the Hansen solubility parameter of the ion conductor in Table 3 and the Hansen solubility parameter of the mixture in Table 4 below were substituted into Equation 1 below to calculate the distance (Rₐ) between the Hansen solubility parameter of the ion conductor and the Hansen solubility parameter of the mixture. The results are shown in Table 4 below. [Equation 1] ${R}_{a} = \sqrt{4 {\left({δ}_{d 1}-{δ}_{d 2}\right)}^{2} + {\left({δ}_{p 1}-{δ}_{p 2}\right)}^{2} + {\left({δ}_{h 1}-{δ}_{h 2}\right)}^{2}}$

In Equation 1, the δ_{d1} (unit: MPa^{0.5}) is a dispersion term of the ion conductor, the δ_{d2} (unit: MPa^{0.5}) is a dispersion term of the mixture, the δₚ₁ (unit: MPa^{0.5}) is a polar term of the ion conductor, the δₚ₂ (unit: MPa^{0.5}) is a polar term of the mixture, the δₕ₁ (unit: MPa^{0.5}) is a hydrogen bonding term of the ion conductor, and the δₕ₂ (unit: MPa^{0.5}) is a hydrogen bonding term of the mixture.

**[Table 4]**

| | Hansen solubility parameter of mixture | | | Distance (Rₐ) between Hansen solubility parameter of ion conductor and Hansen solubility parameter of mixture |
|---|---|---|---|---|
| | δ_{d2}(MPa^{0.5}) | δₚ₂(MPa^{0.5}) | δₕ₂(MPa^{0.5}) | |
| Preparation Example 1 | 15.83 | 13.28 | 32.39 | 20.90 |
| Preparation Example 2 | 16.00 | 13.32 | 29.94 | 18.54 |
| Preparation Example 3 | 16.18 | 13.37 | 27.50 | 16.22 |
| Preparation Example 4 | 15.67 | 12.58 | 32.58 | 20.98 |
| Preparation Example 5 | 15.69 | 11.91 | 30.34 | 18.68 |
| Preparation Example 6 | 15.71 | 11.25 | 28.09 | 16.40 |
| Comparative Example 1 | 16.03 | 12.68 | 29.49 | 18.00 |
| Comparative Example 2 | 15.67 | 12.82 | 33.68 | 22.09 |

### Example 1.

After fixing a polyimide film (PI Advanced Materials, GF300) on a glass plate, the ion conductor dispersion composition prepared according to Preparation Example 1 was primarily coated according to a direct casting method.

After placing an e-PTFE (expanded-polytetrafluoroethylene) support having a porosity of about 87% on the primarily coated polyimide film, the ion conductor dispersion composition was secondarily coated according to the direct casting method.

After drying in an oven in the order of 60°C, 80°C, 100°C, and 120°C, heat treatment was performed for 5 minutes to 10 minutes under a temperature in a range of 200°C to 220°C to manufacture a polymer electrolyte membrane.

### Example 2.

A polymer electrolyte membrane was manufactured in the same manner as in Example 1, except that the ion conductor dispersion composition prepared according to Preparation Example 2 was used instead of the ion conductor dispersion composition prepared according to Preparation Example 1.

### Example 3.

A polymer electrolyte membrane was manufactured in the same manner as in Example 1, except that the ion conductor dispersion composition prepared according to Preparation Example 3 was used instead of the ion conductor dispersion composition prepared according to Preparation Example 1.

### Example 4.

A polymer electrolyte membrane was manufactured in the same manner as in Example 1, except that the ion conductor dispersion composition prepared according to Preparation Example 4 was used instead of the ion conductor dispersion composition prepared according to Preparation Example 1.

### Example 5.

A polymer electrolyte membrane was manufactured in the same manner as in Example 1, except that the ion conductor dispersion composition prepared according to Preparation Example 5 was used instead of the ion conductor dispersion composition prepared according to Preparation Example 1.

### Example 6.

A polymer electrolyte membrane was manufactured in the same manner as in Example 1, except that the ion conductor dispersion composition manufactured according to Preparation Example 6 was used instead of the ion conductor dispersion composition manufactured according to Preparation Example 1.

### Comparative Example 1.

A polymer electrolyte membrane was manufactured in the same manner as in Example 1, except that the ion conductor dispersion composition manufactured according to Preparation Comparative Example 1 was used instead of the ion conductor dispersion composition manufactured according to Preparation Example 1.

### Comparative Example 2.

A polymer electrolyte membrane was manufactured in the same manner as in Example 1, except that the ion conductor dispersion composition manufactured according to Preparation Comparative Example 2 was used instead of the ion conductor dispersion composition manufactured according to Preparation Example 1.

### Evaluation Example 1. Viscosity Measurement

The viscosities of the ion conductor dispersion compositions according to Preparation Examples 1 to 6 and Comparative Examples 1 and 2 were measured as follows.

The viscosities of the ion conductor dispersion compositions of the Preparation Examples and the Comparative Examples were measured using a rheometer under a flow sweep measurement protocol and a 25°C.

The results of the viscosities measured according to the method are shown in Table 5 below.

**[Table 5]**

| | Viscosity (cP) |
|---|---|
| Preparation Example 1 | 247.81 |
| Preparation Example 2 | 247.23 |
| Preparation Example 3 | 247.56 |
| Preparation Example 4 | 598.9 |
| Preparation Example 5 | 663.49 |
| Preparation Example 6 | 1066.69 |
| Comparative Example 1 | 102.4 |
| Comparative Example 2 | 438.4 |

### Evaluation Example 2. Measurement of a contact angle of the ion conductor dispersion composition with respect to the support

The contact angle of the ion conductor dispersion composition with respect to the support according to Preparation Examples 1 to 6 was measured as follows.

The support was fixed on a glass plate, and an image of the ion conductor dispersion composition on the support was captured while dropping the ion conductor dispersion composition according to Preparation Examples 1 to 6 onto the support every 0.206 seconds using contact angle equipment (KRUSS, DSA100).

The contact angles with respect to the support when the ion conductor dispersion composition was dropped onto the support for a 1st time (0 seconds) and a 200th time (41.2 seconds) were measured, and accordingly, the rate of change in a contact angle with respect to the support was calculated according to Equation 1 below. The results at this time are shown in Table 6 below. [Equation 1] 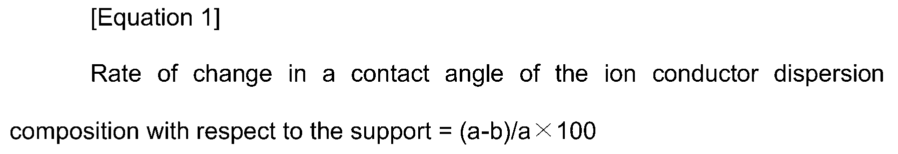 Rate of change in a contact angle of the ion conductor dispersion composition with respect to the support = (a-b)/a × 100

In Equation 1, a is a contact angle with respect to the support when the ion conductor dispersion composition is dropped onto the support for a 1st time, and b is a contact angle with respect to the support when the ion conductor dispersion composition is dropped onto the support for a 200th time.

The rate of change in a contact angle of the ion conductor dispersion composition with respect to the support was rounded off at the third decimal place and shown.

**[Table 6]**

| | Contact angle to support (°) | | Change rate of contact angle to support (%) |
|---|---|---|---|
| | 1st | 200th | |
| Preparation Example 1 | 105.4 | 52.9 | 49.81 |
| Preparation Example 2 | 104.9 | 57 | 45.66 |
| Preparation Example 3 | 91.2 | 60 | 34.21 |
| Preparation Example 4 | 112.1 | 47.9 | 57.27 |
| Preparation Example 5 | 111.5 | 48.9 | 56.14 |
| Preparation Example 6 | 118.4 | 49.1 | 58.53 |
| Comparative Example 1 | 97.2 | 55.5 | 42.90 |
| Comparative Example 2 | 106.9 | 50.3 | 52.95 |

### Evaluation Example 3. Measurement of dispersion particle size and polydispersity index

The ion conductor dispersion particle size and the polydispersity index of the ion conductor dispersion compositions according to Preparation Examples 1 to 6 and Comparative Examples 1 and 2 were measured as follows.

The ion conductor dispersion particle size and the polydispersity index in the composition were measured by diluting with n-propyl alcohol under a 25°C condition utilizing a dynamic light scattering method using particle characteristic analysis equipment (Otsuka, EKSZ-20000S).

The results at this time are shown in Table 7 below.

**[Table 7]**

| | Dispersion particle size (nm) | Polydispersity index (PDI) |
|---|---|---|
| Preparation Example 1 | 827.1 | 0.917 |
| Preparation Example 2 | 1032.1 | 1.131 |
| Preparation Example 3 | 1422.2 | 1.355 |
| Preparation Example 4 | 959.4 | 0.975 |
| Preparation Example 5 | 843.7 | 0.940 |
| Preparation Example 6 | 729.4 | 0.832 |
| Comparative Example 1 | 2427.3 | 2.119 |
| Comparative Example 2 | 1011.5 | 0.922 |

### Evaluation Example 4. Surface Tension Evaluation

The surface tension of the ion conductor dispersion compositions according to Preparation Examples 1 to 6 and Comparative Examples 1 and 2 was measured as follows.

The measurement was performed according to a Du Nouy Ring Method at a measurement temperature of 25°C using K20 equipment of KRUSS, and the results at this time are shown in Table 8 below.

**[Table 8]**

| | Surface tension (mN/m) |
|---|---|
| Preparation Example 1 | 28.12 |
| Preparation Example 2 | 28.76 |
| Preparation Example 3 | 29.02 |
| Preparation Example 4 | 27.20 |
| Preparation Example 5 | 27.61 |
| Preparation Example 6 | 28.17 |
| Comparative Example 1 | 27.65 |
| Comparative Example 2 | 26.19 |

### Evaluation Example 5. Evaluation of total light transmittance (T.t) and transparency (haze)

The total light transmittance (T.t) and transparency (haze) of the polymer electrolyte membranes manufactured according to Examples 1 to 6 and Comparative Examples 1 and 2 were measured as follows.

The total light transmittance (Tt), haze, and parallel transmittance of a 25 cm² polymer electrolyte membrane, measured by passing a light source through the membrane and using an integrating sphere with a light transmittance meter (haze meter), are shown in Table 9 below.

**[Table 9]**

| | Total light transmittance (T.t) | Transparency (%) |
|---|---|---|
| Example 1 | 93.5 | 4.4 |
| Example 2 | 92.1 | 4.8 |
| Example 3 | 92.3 | 5.4 |
| Example 4 | 91.9 | 4.2 |
| Example 5 | 92.6 | 4.2 |
| Example 6 | 92.6 | 4.3 |
| Comparative Example 1 | 93.5 | 13.7 |
| Comparative Example 2 | 92.0 | 17.4 |

### Evaluation Example 6. Measurement of tensile strength and elongation

The tensile strengths and elongations of the polymer electrolyte membranes manufactured according to Examples 1 to 6 and Comparative Examples 1 and 2 were measured as follows.

The tensile strength and tensile elongation were measured by stretching a polymer electrolyte membrane having an area of 10 cm2 in the machine direction (MD) and the transverse direction (TD) using Instron 6800 series equipment with a 1 kN load cell under a condition of a test speed (crosshead speed) of 50 mm/min.

The results at this time are shown in Table 10 below.

**[Table 10]**

| | Tensile strength (MPa) | | Elongation (%) | | |
|---|---|---|---|---|---|
| | MD | TD | MD | TD | Absolute value of difference in elongation between MD and TD |
| Example 1 | 41.8 | 38.0 | 121.3 | 75.1 | 46.2 |
| Example 2 | 42.5 | 42.9 | 117.4 | 94.4 | 23 |
| Example 3 | 40.3 | 38.5 | 120.5 | 94.4 | 26.1 |
| Example 4 | 36 | 34.75 | 236.53 | 162.25 | 74.28 |
| Example 5 | 39.33 | 32.66 | 220.74 | 168.48 | 52.26 |
| Example 6 | 41.67 | 35.6 | 233.74 | 194.52 | 39.22 |
| Comparative Example 1 | 33.9 | 32.4 | 135.1 | 77.6 | 57.46 |
| Comparative Example 2 | 25.5 | 28.3 | 164.4 | 90.3 | 74.1 |

### Evaluation Example 7. Measurement of wet expansion rate and water absorption rate

The wet expansion rates and water absorption rates of the polymer electrolyte membranes manufactured according to Examples 1 to 6 and Comparative Examples 1 and 2 were measured as follows.

After the polymer electrolyte membrane is dried in a vacuum oven at 80°C for 24 hours, the weight (W_{dry}) of the membrane and the lengths (L_{dry,IP}, L_{dry,TP}) in the in-plane direction (IP) and the through-plane direction (TP) are measured. Thereafter, after immersing the corresponding membrane in ultrapure water under a room temperature condition for 24 hours, taking it out again, and immediately removing water on the surface, the weight (W_{wet}) of the membrane and the lengths (L_{wet},_{IP}, L_{wet, TP}) in the in-plane direction (IP) and the through-plane direction (TP) are immediately measured. The swelling ratios in the in-plane direction and the through-plane direction and the water uptake according to the method are calculated by Equations 2 to 4 below at 20°C and 80°C, respectively. The results at this time are shown in Table 11 below. [Equation 2] $Swelling ratio in the in - plane \left(IP\right) direction \left(%\right) = \left({L}_{wet , IP}-{L}_{dry , IP}\right) / {L}_{dry , IP} \times 100$ [Equation 3] 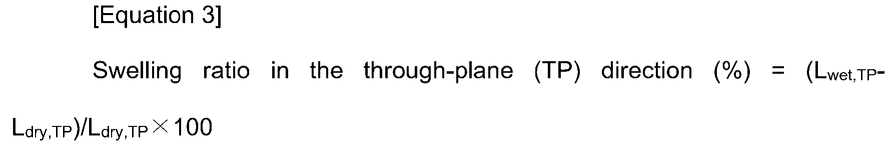 Swelling ratio in the through-plane (TP) direction (%) = (Lwet,TP-Ldry,TP)/Ldry,TP × 100 [Equation 4] $Water uptake \left(%\right) = \left({W}_{wet}-{W}_{dry}\right) / {W}_{dry} \times 100$

**[Table 11]**

| | 20°C | | | 80°C | | |
|---|---|---|---|---|---|---|
| | Wet expansion rate (%) | | | Wet expansion rate (%) | | |
| | IP | TP | Water absorption rate (%) | IP | TP | Water absorption rate (%) |
| Example 1 | 18.32 | 24.65 | 32.73 | 30.95 | 23.81 | 41.43 |
| Example 2 | 17.64 | 25.71 | 31.61 | 35.18 | 30.46 | 42.88 |
| Example 3 | 17.08 | 26.01 | 29.39 | 38.76 | 32.11 | 43.83 |
| Example 4 | 15.53 | 23.40 | 43.39 | 38.94 | 43.78 | 50.08 |
| Example 5 | 15.46 | 22.37 | 29.79 | 35.85 | 42.32 | 50.05 |
| Example 6 | 15.09 | 21.03 | 28.31 | 35.46 | 42.05 | 47.19 |
| Comparative Example 1 | 9.7 | 23.44 | 26.86 | 28.73 | 49.29 | 53.40 |
| Comparative Example 2 | 13.11 | 24.7 | 29.32 | 37.58 | 61.37 | 65.18 |

### Evaluation Example 8. Measurement of hydrogen ion conductivity

The in-plane direction hydrogen ion conductivities of the polymer electrolyte membranes manufactured according to Examples 1 to 6 and Comparative Examples 1 and 2 were measured as follows.

The in-plane direction and through-plane direction hydrogen ion conductivities (In-plane ion-Conductivity) were calculated through the following equation using the membrane resistance at temperatures of 20°C, 40°C, 60°C, and 80°C by measuring the resistance of the membrane under conditions of immersion in water and temperatures of 20°C, 40°C, 60°C, and 80°C using a 1225B Frequency Response Analyzer (Solartron). At this time, the effective area of the membrane was 1 cm².

The results at this time are shown in Table 12 below.

**[Table 12]**

| | In-plane hydrogen ion conductivity (S/cm) | | | | Through-plane direction hydrogen ion conductivity (S/cm) | | | |
|---|---|---|---|---|---|---|---|---|
| | 20°C | 40°C | 60°C | 80°C | 20°C | 40°C | 60°C | 80°C |
| Example 1 | 0.080 | 0.133 | 0.166 | 0.215 | 0.099 | 0.139 | 0.190 | 0.243 |
| Example 2 | 0.116 | 0.170 | 0.225 | 0.289 | 0.128 | 0.183 | 0.239 | 0.299 |
| Example 3 | 0.151 | 0.197 | 0.284 | 0.377 | 0.165 | 0.219 | 0.325 | 0.407 |
| Example 4 | 0.119 | 0.164 | 0.231 | 0.297 | 0.128 | 0.173 | 0.243 | 0.308 |
| Example 5 | 0.123 | 0.171 | 0.239 | 0.283 | 0.118 | 0.158 | 0.223 | 0.277 |
| Example 6 | 0.099 | 0.139 | 0.187 | 0.230 | 0.106 | 0.148 | 0.201 | 0.246 |
| Comparative Example 1 | 0.142 | 0.256 | 0.287 | 0.362 | 0.139 | 0.202 | 0.277 | 0.336 |
| Comparative Example 2 | 0.137 | 0.189 | 0.258 | 0.330 | 0.158 | 0.213 | 0.294 | 0.364 |

### Evaluation Example 9. Density Evaluation

The density evaluation of the polymer electrolyte membranes manufactured according to Examples 1 to 6 and Comparative Examples 1 and 2 was measured as follows.

The measurement was performed using a density KIT of an ML54T device from Mettler Toledo, and during the density measurement, distilled water was used as the solution to measure the density using the buoyancy of water.

The results at this time are shown in Table 13 below.

**[Table 13]**

| | Density (g/cm³) |
|---|---|
| Example 1 | 1.94 |
| Example 2 | 1.95 |
| Example 3 | 1.95 |
| Example 4 | 1.96 |
| Example 5 | 1.90 |
| Example 6 | 1.90 |
| Comparative Example 1 | 1.90 |
| Comparative Example 2 | 1.85 |

### Evaluation Example 10. In-plane direction compressive resistance measurement

The in-plane direction compressive resistance of the polymer electrolyte membranes manufactured according to Examples 1 to 6 and Comparative Examples 1 to 2 was measured as follows.

A sample was prepared using the polymer electrolyte membrane cut to have a width of 50 mm and a length of 50 mm, the sample was placed on a flat surface, and then the in-plane direction compressive resistance was measured using Instron 6800 series equipment under a condition of a test speed of 10 mm/min, using a 1 kN load cell and a needle having a diameter of 15 mm.

The results at this time are shown in Table 14 below.

**[Table 14]**

| | Compression resistance (N) |
|---|---|
| Example 1 | 38.0 |
| Example 2 | 42.1 |
| Example 3 | 46.4 |
| Example 4 | 35.6 |
| Example 5 | 34.5 |
| Example 6 | 39.3 |
| Comparative Example 1 | 40.2 |
| Comparative Example 2 | 35.4 |

### Evaluation Example 11. Performance Evaluation

The performance of the polymer electrolyte membranes manufactured according to Examples 1 to 6 and Comparative Examples 1 to 2 was measured as follows.

A catalyst mixture for manufacturing a hydrogen evolution electrode (HER) is mixed such that a ratio of a 50 wt% Pt/C catalyst to a polymer binder is 1:1.2 and a solid content ratio is 5 wt%. A hydrogen electrode having an active area of 4 cm² was manufactured by using a spray coating method on an electrode-coating substrate film such that a catalyst loading amount was 1.0 mg/cm².

A catalyst mixture for manufacturing an oxygen evolution electrode (OER) is mixed such that a ratio of an IrO_{X} catalyst to a polymer binder is 1:0.2 and a solid content ratio is 5 wt%. An oxygen electrode having an active area of 4 cm² was manufactured by utilizing the same coating method as that of the hydrogen electrode such that a catalyst loading amount was 0.5 mg/cm².

The hydrogen electrode, the polymer electrolyte membrane manufactured according to Examples 1 to 6 and Comparative Examples 1 to 2, and the oxygen electrode were stacked in this order, and thermocompression bonding was performed at 150°C for 5 minutes.

A performance evaluation of the membrane-electrode assembly manufactured with an active area of 9 cm² was performed while supplying water at 80°C and a rate of 5 mL/min at atmospheric pressure using a multi-channel potentiostat (Bio-Logic, HCP-803 Potentiostat) and a pump (KNF Neuberger, SIMDOS 02 FEM 1.02S).

The performance evaluation of the membrane-electrode assembly at this time is shown in FIG. 1.

Although preferred embodiments have been described in detail above, the scope of rights is not limited thereto, and various modifications and improvements by those skilled in the art using the basic concept defined in the following claims also fall within the scope of rights.

## Claims

1. An ion conductor dispersion composition comprising an ion conductor, a solvent, an eco-friendly additive solvent, and a non-solvent,
wherein a pKa value of the eco-friendly additive solvent is in a range of 0 to 7.5, and
the eco-friendly additive solvent satisfies that a dispersion term of a Hansen solubility parameter is greater than or equal to 16 MPa^{0.5}, a polar term is greater than or equal to 6 MPa^{0.5}, and a hydrogen bonding term is less than or equal to 13 MPa^{0.5}.

2. The ion conductor dispersion composition of claim 1,
wherein the eco-friendly additive solvent has a score in a range of 4 to 10 in all items according to a solvent selection guide of GSK.

3. The ion conductor dispersion composition of claim 1,
wherein the eco-friendly additive solvent is a polar aprotic solvent, and
the polar aprotic solvent is γ-Butyrolactone, Methyl L-lactate, γ-Valerolactone, ethyl lactate, Dimethyl Carbonate, cyclic carbonate, succinic acid, Diformylxylose, pentanoic acid, 5-(dimethylamino)-2-methyl-5-oxo-, methyl ester; CAS No. 1174627-68-9), dihydrolevoglucosenone, methyl sesamol, or a combination thereof.

4. The ion conductor dispersion composition of claim 1,
wherein a distance (Rₐ) between a Hansen solubility parameter of the ion conductor and a Hansen solubility parameter of a mixture of the solvent, the eco-friendly additive solvent, and the non-solvent calculated according to Equation 1 below is in a range of 0.1 MPa^{0.5} to 30 MPa^{0.5}, and
a dispersion term, a polar term, and a hydrogen bonding term of the Hansen solubility parameter of the mixture of the solvent, the eco-friendly additive solvent, and the non-solvent are calculated according to Equations 2-1 to 2-3 below: [Equation 1] ${R}_{a} = \sqrt{4 {\left({δ}_{d 1}-{δ}_{d 2}\right)}^{2} + {\left({δ}_{p 1}-{δ}_{p 2}\right)}^{2} + {\left({δ}_{h 1}-{δ}_{h 2}\right)}^{2}}$ In Equation 1,
the δ_{d1} (unit: MPa^{0.5}) is the dispersion term of the ion conductor,
the δ_{d2} (unit: MPa^{0.5}) is the dispersion term of the mixture,
the δₚ₁ (unit: MPa^{0.5}) is the polar term of the ion conductor,
the δₚ₂ (unit: MPa^{0.5}) is the polar term of the mixture,
the δₕ₁ (unit: MPa^{0.5}) is the hydrogen bonding term of the ion conductor,
the δₕ₂ (unit: MPa^{0.5}) is the hydrogen bonding term of the mixture: [Equation 2-1] ${δ}_{d 2} = \frac{{w}_{1} {δ}_{d , 1} + {w}_{2} {δ}_{d , 2} + {w}_{3} {δ}_{d , 3}}{100}$ [Equation 2-2] ${δ}_{p 2} = \frac{{w}_{1} {δ}_{p , 1} + {w}_{2} {δ}_{p , 2} + {w}_{3} {δ}_{p , 3}}{100}$ [Equation 2-3] ${δ}_{h 2} = \frac{{w}_{1} {δ}_{h , 1} + {w}_{2} {δ}_{h , 2} + {w}_{3} {δ}_{h , 3}}{100}$
In Equations 2-1 to 2-3, δ_{d2} is the dispersion term of the mixture, δₚ₂ is the polar term of the mixture, δₕ₂ is the hydrogen bonding term of the mixture, w₁ is the weight of the solvent, w₂ is the weight of the eco-friendly additive solvent, w₃ is the weight of the non-solvent, δ_{d,1}, δ_{p,1}, and δ_{h,1} are respectively the dispersion term, the polar term, and the hydrogen bonding term of the Hansen solubility parameter of the solvent, δ_{d,2}, δ_{p,2}, and δ_{h,2} are the dispersion term, the polar term, and the hydrogen bonding term of the Hansen solubility parameter of the eco-friendly additive solvent, and δ_{d,3}, δ_{p,3}, and δ_{h,3} are the dispersion term, the polar term, and the hydrogen bonding term of the Hansen solubility parameter of the non-solvent.

5. The ion conductor dispersion composition of claim 1,
wherein the eco-friendly additive solvent is included in a range of 3 wt% to 20 wt% based on a total weight of the ion conductor dispersion composition,
the solvent is included in a range of 180 parts by weight to 1000 parts by weight based on 100 parts by weight of the eco-friendly additive solvent, and
the non-solvent is included in a range of 100 parts by weight to 500 parts by weight based on 100 parts by weight of the eco-friendly additive solvent.

6. The ion conductor dispersion composition of claim 1,
wherein a viscosity measured using a rheometer under a flow sweep measurement protocol at 25°C is in a range of 200 cP to 1100 cP.

7. The ion conductor dispersion composition of claim 1,
wherein a rate of change in a contact angle with respect to a support calculated according to Formula 1 below is 30% to 60%: [Formula 1] $Rate of change in a contact angle with respect to a support = \left(a-b\right) / a \times 100$
In Equation 1, a is a contact angle with respect to the support when the ion conductor dispersion composition is dropped onto the support for the 1st time, and b is a contact angle with respect to the support when the ion conductor dispersion composition is dropped onto the support for the 200th time.

8. The ion conductor dispersion composition of claim 1,
wherein an ion conductor dispersion particle size in the ion conductor dispersion composition is in a range of 500 nm to 2000 nm.

9. The ion conductor dispersion composition of claim 1,
wherein an ion conductor polydispersity index in the ion conductor dispersion composition is in a range of 0.9 to 1.5.

10. A method of manufacturing a polymer electrolyte membrane, comprising:
mixing an ion conductor with a solvent to prepare a first mixture,
adding an eco-friendly additive solvent to the first mixture and mixing to prepare a second mixture,
adding a non-solvent to the second mixture and mixing to prepare an ion conductor dispersion composition, and
manufacturing a polymer electrolyte membrane by coating the ion conductor dispersion composition on a substrate and then performing drying and heat treatment,
wherein a pKa value of the eco-friendly additive solvent is in a range of 0 to 7.5, and
the eco-friendly additive solvent satisfies that a dispersion term of a Hansen solubility parameter is greater than or equal to 16 MPa^{0.5}, a polar term is greater than or equal to 6 MPa^{0.5}, and a hydrogen bonding term is less than or equal to 13 MPa^{0.5}.

11. The method of manufacturing a polymer electrolyte membrane of claim 10, further comprising:
after coating the ion conductor dispersion composition on the substrate and before performing the drying and the heat treatment,
placing a porous support on the substrate coated with the ion conductor dispersion composition, and coating the ion conductor dispersion composition again on the porous support.

12. The method of manufacturing a polymer electrolyte membrane of claim 11,
wherein the drying is performed under a temperature in a range of 60°C to 120°C, and
the heat treatment is performed under a temperature in a range of 150°C to 220°C when a fluorine-based ion conductor is used, and is performed under a temperature in a range of 80°C to 500°C when a hydrocarbon-based ion conductor is used.

13. A polymer electrolyte membrane comprising:
a porous support comprising a plurality of pores; and
an ion conductor filling the pores of the porous support,
wherein a transparency (haze) measured by total light transmittance equipment is 0.1 % to 10 %.

14. The polymer electrolyte membrane of claim 13,
wherein a total light transmittance (T.t) measured by total light transmittance equipment is greater than or equal to 90%.

15. The polymer electrolyte membrane of claim 13,
wherein a tensile strength in a machine direction (MD) is greater than or equal to 35 MPa, and a tensile strength in a transverse direction (TD) is greater than or equal to 30 MPa.

16. The polymer electrolyte membrane of claim 13,
wherein an absolute value of a difference between an elongation in a machine direction (MD) and an elongation in a transverse direction (TD) is less than or equal to 50%.

17. The polymer electrolyte membrane of claim 13,
wherein an in-plane wet expansion rate measured at 15 to 25°C is less than or equal to 20%.

18. The polymer electrolyte membrane of claim 13,
wherein an in-plane wet expansion rate measured at 75 to 85°C is less than or equal to 40%.

19. A membrane-electrode assembly comprising:
the polymer electrolyte membrane of claim 13;
a hydrogen electrode positioned on one surface of the polymer electrolyte membrane; and
an air electrode positioned on the other surface of the polymer electrolyte membrane.

20. An electrochemical cell comprising the membrane-electrode assembly according to claim 19.
